# EUROPEAN PATENT APPLICATION

(11) **EP 4 060 700 A1**
(43) Date of publication of application: **21.09.2022**
(21) Application number: 22161572.7
(22) Date of filing: 11.03.2022
(51) Int. Cl.: H01G 9/20

(54) **PHOTOELECTRIC CONVERSION ELEMENT, ELECTRONIC DEVICE, AND POWER SUPPLY MODULE**

(30) Priority: 19.03.2021 JP 2021045461
(71) Applicant: Ricoh Company, Ltd., Tokyo 143-8555 (JP)
(72) Inventor: TANAKA, Yuuji, Tokyo, 143-8555 (JP); TAMOTO, Nozomu, Tokyo, 143-8555 (JP); TANAKA, Masato, Tokyo, 143-8555 (JP); HORIUCHI, Tamotsu, Tokyo, 143-8555 (JP)
(74) Representative: J A Kemp LLP

(57) **Abstract**

A photoelectric conversion element (201,202,203) including a first substrate (1a,1b), a second substrate (8a,9b), and a first photoelectric conversion section (101,103,105) and a second photoelectric conversion section (102,104,106) disposed between the first substrate (1a,1b) and the second substrate (8a,9b) via a sealing member (15a,17b). The first photoelectric conversion section (101,103,105) includes a first electrode (2a,2c), a first electron-transporting layer (4a) on the first electrode (2a,2c), a first photosensitization compound (5a) adsorbed on a surface of the first electron-transporting layer (4a), a first hole-transporting layer (6a,6c), and a second electrode (7a,7b,7c). The second photoelectric conversion section (102,104,106) includes a third electrode (9a,10c), a second electron-transporting layer (11a,12c) on the third electrode (9a,10c), a second photosensitization compound (12a) adsorbed on a surface of the second electron-transporting layer (11a,12c), a second hole-transporting layer (13a,14c), and a fourth electrode (14a,15b,15c). The second photosensitization compound (12a) is different from the first photosensitization compound (5a).

## Description

### BACKGROUND OF THE INVENTION

### Field of the Invention

The present disclosure relates to a photoelectric conversion element, an electronic device, and a power supply module.

### Description of the Related Art

In recent years, solar battery cells that can efficiently generate power with low intensity of illumination have been attracted attention. Solar battery cells are expected to be widely used as self-harvesting power supplies that do not require replacement of batteries or installation of power supply wiring, as well as application thereof regardless of installation locations.

As photoelectric conversion elements for indoor use, amorphous silicon-based solar battery cells and organic solar battery cells have been known. Among the organic solar battery cells, dye-sensitized solar battery cells are advantageous because a dye-sensitized solar battery cell are composed of separate layers each having charge generation capability and charge transportation capability, and such dye-sensitized solar battery cell can be easily produced. Generally, a dye-sensitized solar battery cell encapsulates an electrolytic solution and therefore has a problem of evaporation or leakage of the solution. However, solid dye-sensitized solar battery cells using a p-type semiconductor material have been recently developed, and such solid dye-sensitized solar battery cells have attracted attention.

For example, proposed is a tandem, organic solar battery cell having a tandem structure where two solar battery cells are stacked via an intermediate layer (see, for example, Japanese Unexamined Patent Application Publication No. 2011-82396).

### SUMMARY OF THE INVENTION

According to one aspect of the present disclosure, a photoelectric conversion element includes a first substrate, a second substrate, and a first photoelectric conversion section and a second photoelectric conversion section. The first photoelectric conversion section and the second photoelectric conversion section are disposed between the first substrate and the second substrate via a sealing member. The first photoelectric conversion section includes a first electrode, a first electron-transporting layer formed on the first electrode, a first photosensitization compound adsorbed on a surface of the first electron-transporting layer, a first hole-transporting layer, and a second electrode. The second photoelectric conversion section includes a third electrode, a second electron-transporting layer formed on the third electrode, a second photosensitization compound adsorbed on a surface of the second electron-transporting layer, a second hole-transporting layer, and a fourth electrode, where the second photosensitization compound is different from the first photosensitization compound.

### BRIEF DESCRIPTION OF THE DRAWINGS

FIG. 1 is a schematic view illustrating an example of the photoelectric conversion element of the present disclosure;
FIG. 2 is a schematic view illustrating another example of the photoelectric conversion element of the present disclosure;
FIG. 3 is a schematic view illustrating yet another example of the photoelectric conversion element of the present disclosure;
FIG. 4 is a block diagram illustrating a mouse for a personal computer, as an example of the electronic device of the present disclosure;
FIG. 5 is a schematic external view illustrating an example of the mouse of FIG. 4;
FIG. 6 is a block diagram illustrating a keyboard for a personal computer, as an example of the electronic device of the present disclosure;
FIG. 7 is a schematic external view illustrating an example of the keyboard of FIG. 6;
FIG. 8 is a schematic external view illustrating another example of the keyboard of FIG. 6;
FIG. 9 is a block diagram illustrating a sensor, as an example of the electronic device of the present disclosure;
FIG. 10 is a block diagram illustrating a turntable, as an example of the electronic device of the present disclosure;
FIG. 11 is a block diagram illustrating an example of the electronic device of the present disclosure;
FIG. 12 is a block diagram illustrating the electronic device of FIG. 11, into which a power supply integrated circuit is incorporated;
FIG. 13 is a block diagram illustrating the electronic device of FIG. 12, into which an electricity storage device is incorporated;
FIG. 14 is a block diagram illustrating an example of the power supply module of the present disclosure; and
FIG. 15 is a block diagram illustrating an example of the power supply module of FIG. 14, into which an electricity storage device is incorporated.

### DESCRIPTION OF THE EMBODIMENTS

### (Photoelectric conversion element)

The photoelectric conversion element is an element that can convert photo energy into electric energy, or electric energy into photo energy. The photoelectric conversion element has been applied for a solar battery cell or a photodiode. The photoelectric conversion element is preferably a solid photoelectric conversion element.

The photoelectric conversion element includes a first substrate, a second substrate, and a first photoelectric conversion section and a second photoelectric conversion section. The first photoelectric conversion section and the second photoelectric conversion section are disposed between the first substrate and the second substrate via a sealing member.

The first photoelectric conversion section includes a first electrode, a first electron-transporting layer formed on the first electrode, a first photosensitization compound adsorbed on a surface of the first electron-transporting layer, a first hole-transporting layer, and a second electrode. The first photoelectric conversion section may further include other members according to the necessity.

The second photoelectric conversion section includes a third electrode, a second electron-transporting layer formed on the third electrode, a second photosensitization compound adsorbed on a surface of the second electron-transporting layer, a second hole-transporting layer, and a fourth electrode. The second photosensitization compound is different from the first photosensitization compound. The second photoelectric conversion section may further include other members according to the necessity.

The present disclosure has an object to provide a photoelectric conversion element exhibiting absorption with light over a wide wavelength range.

The present disclosure can provide a photoelectric conversion element exhibiting absorption with light over a wide wavelength range.

In the related art, a photoelectric conversion element has a tandem structure where layers are stacked with an intermediate layer disposed between layers. Therefore, the photoelectric conversion element of the related art has a problem that a coating step that is highly controlled is required to form a continuous thin film layer, leading to a low production efficiency.

Since the photoelectric conversion element of the present disclosure includes two photoelectric conversion sections (photoelectric conversion elements) having mutually different absorption wavelengths, the photoelectric conversion element exhibiting light absorption in a wide wavelength range of light can be provided. Since a tandem structure is formed with two different photoelectric conversion sections (photoelectric conversion elements) via a sealing member, a photoelectric conversion element, which exhibits absorption with light of a wide wavelength range including by a region where the photoelectric conversion sections are overlapped, and has the high maximum output, can be obtained.

In the present disclosure, moreover, a highly light transmitting first photoelectric conversion section and second photoelectric conversion section, each having a translucent conductive substrate and a translucence electrode are disposed to face each other and sealed between the two translucent conductive substrate, and therefore the photoelectric conversion element exhibits light absorption with light of a wide wavelength range.

A structure of the first photoelectric conversion section and a structure of second photoelectric conversion section in the photoelectric conversion element of the present disclosure will be described in detail, hereinafter.

### <First substrate and second substrate>

Shapes, structures, and sizes of the first substrate and the second substrate are not particularly limited, and may be appropriately selected depending on the intended purpose.

A material of the first substrate and a material of the second substrate are not particularly limited, and may be appropriately selected depending on the intended purpose. Examples thereof includes substrates of glass, plastic films, etc. Among the above-listed examples, a substrate having heat resistance against a firing temperature is preferable when a step including firing is performed for forming the below-described electron-transporting layer. Moreover, the first substrate and the second substrate preferably are flexible substrates.

The first substrate and the second substrate preferably have translucency. Having translucency means that optical transmittance of the first substrate and the optical transmittance of the second substrate are 80% or greater. The optical transmittance can be measured by a general ultraviolet and visible spectrophotometer.

### <First electrode (third electrode)>

A shape and size of the first electrode (the first electrode may be the third electrode, hereinafter) are not particularly limited, and may be appropriately selected depending on the intended purpose.

A structure of the first electrode is not particularly limited, and may be appropriately selected depending on the intended purpose. The structure of the first electrode may be a single layer structure, or a laminate of several materials.

A material of the first electrode is not particularly limited as long as the material has translucency and conductivity, and may be appropriately selected depending on the intended purpose. Examples thereof include transparent conductive metal oxide, carbon, and metal.

Examples of the transparent conductive metal oxide include tin-doped indium oxide (referred to as "ITO" hereinafter), fluorine-doped tin oxide (referred to as "FTO" hereinafter), antimony-doped tin oxide (referred to as "ATO" hereinafter), niobium-doped tin oxide (referred to as "NTO" hereinafter), aluminium-doped zinc oxide, indium zinc oxide, and niobium titanium oxide.

Examples of the carbon include carbon black, carbon nanotube, graphene, and fullerene.

Examples of the metal include gold, silver, aluminum, nickel, indium, tantalum, and titanium.

The above-listed materials of the first electrode may be used alone or in combination. Among the above-listed materials, a transparent conductive metal oxide having high transparency is preferable, and ITO, FTO, ATO, and NTO are more preferable.

The average thickness of the first electrode is not particularly limited, and may be appropriately selected depending on the intended purpose. The average thickness of the first electrode is preferably 5 nm or greater but 100 µm or less, and more preferably 50 nm or greater but 10 µm or less. When the material of the first electrode is carbon or metal, the average thickness of the first electrode is preferably the average thickness allowing the first electrode to obtain translucency.

The first electrode can be formed by any method known in the art, such as sputtering, vapor deposition, and spraying.

Moreover, the first electrode is preferably formed on the first substrate. As the first electrode, a commercially available integrated product in which a first electrode is formed on a first substrate in advance can be used.

Examples of the commercially available integrated product include FTO-coated glass, ITO-coated glass, zinc oxide, aluminum-coated glass, FTO-coated transparent plastic films, and ITO-coated transparent plastic films. Examples of other commercially available integrated product include: a glass substrate provided with a transparent electrode where tin oxide or indium oxide is doped with a cation or an anion having a different atomic value; and a glass substrate provided with a metal electrode having such a structure that allows light to pass in the shape of a mesh or stripes.

The above-listed examples may be used alone, or two or more of the above-listed examples may be used together or laminated. Moreover, a metal lead wire may be used in combination for the purpose of reducing an electric resistance value of the first electrode.

Examples of a material of the metal lead wire include aluminum, copper, silver, gold, platinum, and nickel.

For example, the metal lead wire can be used in combination by disposing the metal lead wire on the substrate through vapor deposition, sputtering, or pressure bonding, and depositing a layer of ITO or FTO thereon.

The first electrode preferably has translucency. Having translucency means that optical transmittance of the first electrode is 80% or greater. The optical transmittance can be measured by a general ultraviolet and visible spectrophotometer.

### <First and second hole-blocking layers>

The first hole-blocking layer and the second hole-blocking layer may have the same size, shape, structure, and material, or may have mutually different sizes, shapes, structures, and materials. The size, shape, structure, and material of the first hole-blocking layer are preferably identical to the size, shape, structure, and material of the second hole-blocking layer. The first and second hole-blocking layers may be collectively referred to as a hole-blocking layer hereinafter.

The first hole-blocking layer is formed between the first electrode and the first electron-transporting layer.

The first hole-blocking layer is capable of transporting electrons generated by the first photosensitization compound and transported to the first electron-transporting layer to the first electrode, and preventing contact with the first hole-transporting layer. As a result, the first hole-blocking layer can prevent holes from flowing into the first electrode, and can prevent reduction in output caused by recombination of electrons and holes. The solid photoelectric conversion element, in which the first hole-transporting layer is disposed, has the faster speed of recombination between holes in the hole-transporting material and electrons on the surface of the electrode compared to a wet photoelectric conversion element using an electrolytic solution. Therefore, an effect obtained by forming the first hole-blocking layer is significant.

The second hole-blocking layer is formed between the third electrode and the second electron-transporting layer.

The second hole-blocking layer is capable of transporting electrons, which are generated by the second photosensitization compound and transported to the second electron-transporting layer, to the third electrode, and preventing the electrons from being in contact with the second hole-transporting layer. As a result, the second hole-blocking layer can prevent holes from flowing into the third electrode, and can suppress reduction in output due to recombination of electrons and holes. The solid photoelectric conversion element, in which the second hole-transporting layer is disposed, has the faster speed of recombination between holes in the hole-transporting material and electrons on the surface of the electrode compared to a wet photoelectric conversion element using an electrolytic solution. Therefore, an effect obtained by forming the second hole-blocking layer is significant.

A material of the hole-blocking layer is not particularly limited as long as the material is transparent to visible light and has electron-transporting capabilities, and may be appropriately selected depending on the intended purpose. Examples of the material include: an element semiconductor, such as silicon, and germanium; a compound semiconductor, such as chalcogenide of metal; and a compound having a perovskite structure.

Examples of the chalocogenide of metal include: oxides of titanium, tin, zinc, iron, tungsten, zirconium, hafnium, strontium, indium, cerium, yttrium, lanthanum, vanadium, niobium, tantalum, etc.; sulfides of cadmium, zinc, lead, silver, antimony, bismuth, etc.; selenides of cadmium, lead, etc.; and tellurium compounds of cadmium, etc. Examples of other compound semiconductors include: phosphides of zinc, gallium, indium, cadmium, etc.; gallium arsenide; copper-indium-selenide; and copper-indium-sulfide.

Examples of the compound having the perovskite structure include strontium titanate, calcium titanate, sodium titanate, barium titanate, and potassium niobate.

The above-listed materials of the hole-blocking layer may be used alone or in combination. Among the above-listed materials, an oxide semiconductor is preferable, titanium oxide, niobium oxide, magnesium oxide, aluminium oxide, zinc oxide, tungsten oxide, and tin oxide are more preferable, and titanium oxide is more preferable.

The hole-blocking layer may be a single layer, or a multiple layer. Moreover, a crystal type of the above-mentioned semiconductor is not particularly limited, and may be appropriately selected depending on the intended purpose. The semiconductor may be monocrystalline, polycrystalline, or amorphous.

A production method of the hole-blocking layer is not particularly limited, and may be appropriately selected depending on the intended purpose. Examples of the production method include a method for forming a thin film in vacuum (a vacuum film formation method), and a wet film formation method.

Examples of the vacuum film formation method include sputtering, pulsed laser deposition (PLD), ion-beam sputtering, ion-assisted deposition, ion plating, vacuum vapor deposition, atomic layer deposition (ALD), and chemical vapor deposition (CVD).

Examples of the wet film formation method include a sol-gel method. According to the sol-gel method, a solution is subjected to a chemical reaction, such as hydrolysis, polymerization, and condensation, to form a gel, followed by performing a heat treatment to accelerate densification of the gel. When the sol-gel method is used, a coating method of the sol solution is not particularly limited, and may be appropriately selected depending on the intended purpose. Examples of the coating method include dip coating, spray coating, wire bar coating, spin coating, roller coating, blade coating, and gravure coating. Moreover, a wet printing method may be used as the coating method. Examples of the wet printing method include relief printing, offset printing, gravure printing, intaglio printing, rubber plate printing, and screen printing. Moreover, a temperature of a heat treatment performed after applying the sol solution is preferably 80°C or greater, and more preferably 100°C or greater.

The average thickness of the hole-blocking layer is not particularly limited, and may be appropriately selected depending on the intended purpose. The average thickness of the hole-blocking layer is preferably 5 nm or greater but 1 µm or less. In case of wet film formation, the average thickness thereof is more preferably 500 nm or greater but 700 nm or less. In case of dry film formation, the average thickness thereof is more preferably 5 nm or greater but 30 nm or less.

### <First and second electron-transporting layers>

The first electron-transporting layer and the second electron-transporting layer may have the same size, shape, structure, and material, or may have mutually different sizes, shapes, structures, and materials. The size, shape, structure and material of the first electron-transporting layer are preferably identical to the size, shape, structure, and material of the second electron-transporting layer. The first and second electron-transporting layers may be collectively referred to as an electron-transporting layer hereinafter.

The first electron-transporting layer is formed for the purpose of transporting electrons generated by the first photosensitization compound to the first electrode or the first hole-blocking layer. Therefore, the first electron-transporting layer is preferably disposed next to the first electrode or the first hole-blocking layer.

The second electron-transporting layer is formed for the purpose of transporting electrons generated by the second photosensitization compound to the third electrode of the second hole-blocking layer. Therefore, the second electron-transporting layer is preferably disposed next to the third electrode or the second hole-blocking layer.

A structure of the electron-transporting layer is not particularly limited, and may be appropriately selected depending on the intended purpose. When at least two photoelectric conversion elements are disposed next to each other, the electron-transporting layer of one photoelectric conversion element and the electron-transporting layer of another photoelectric conversion element are preferably disposed not to be extended from and connected to each other. When the electron-transporting layers are not mutually extended from each other or connected to each other, diffusion of electrons can be suppressed to reduce current leakage, thus photodurability is improved, which is advantageous. Moreover, the structure of the electron-transporting layer may be a single layer structure formed of a continuous layer, or a multilayer structure where a plurality of layers are stacked.

The electron-transporting layer includes an electron-transporting material, and may further include other materials according to the necessity.

The electron-transporting material is not particularly limited, and may be appropriately selected depending on the intended purpose. The electron-transporting material is preferably a semiconductor material.

The semiconductor material preferably includes particles that are bonded to together to form a porous film. The photosensitization compound is chemically or physically adsorbed on surfaces of the semiconductor particles constituting the porous electron-transporting layer.

The semiconductor material is not particularly limited, and may be appropriately selected depending on the intended purpose. Examples of the semiconductor material include an element semiconductor, a compound semiconductor, and a compound having a perovskite structure.

Examples of the element semiconductor include silicon and germanium.

Examples of the compound semiconductor include chalcogenide of metal. Specific examples thereof include: oxides of titanium, tin, zinc, iron, tungsten, zirconium, hafnium, strontium, indium, cerium, yttrium, lanthanum, vanadium, niobium, tantalum, etc.; sulfides of cadmium, zinc, lead, silver, antimony, bismuth, etc.; selenides of cadmium, lead, etc.; tellurium compounds of cadmium, etc.; and other compound semiconductors. Examples of the above-mentioned other compound semiconductors include: phosphides of zinc, gallium, indium, cadmium, etc.; gallium arsenide; copper-indium-selenide; and copper-indium-sulfide.

Examples of the compound having the perovskite structure include strontium titanate, calcium titanate, sodium titanate, barium titanate, and potassium niobate.

Among the above-listed examples, oxide semiconductors are preferable, and titanium oxide, zinc oxide, tin oxide, and niobium oxide are more preferable.

When the electron-transporting material of the electron-transporting layer is titanium oxide, the conduction band thereof is high, and therefore high open circuit voltage is obtained. Moreover, a refractive index thereof is high, and therefore high short-circuit current is obtained owing to a light confinement effect. Furthermore, the dielectric constant thereof is high and the mobility is high, and therefore a high fill factor is obtained. Therefore, use of titanium oxide as the electron-transporting material is advantageous.

The above-listed examples may be used alone or in combination. Moreover, a crystal type of the semiconductor material is not particularly limited, and may be appropriately selected depending on the intended purpose. The semiconductor material may be monocrystalline, polycrystalline, or amorphous.

The number average particle diameter of the primary particles of the semiconductor material is not particularly limited, and may be appropriately selected depending on the intended purpose. The number average particle diameter thereof is preferably 1 nm or greater but 100 nm or less, and more preferably 5 nm or greater but 50 nm or less. Moreover, a semiconductor material having the larger particle diameter than the above-mentioned number average particle diameter may be blended or laminated, which may lead to improvement of conversion efficiency owing to an effect of scattering incident light. In this case, the number average particle diameter of the semiconductor material having the larger particle diameter is preferably 50 nm or greater but 500 nm or less.

The average thickness of the electron-transporting layer is not particularly limited, and may be appropriately selected depending on the intended purpose. The average thickness of the electron-transporting layer is preferably 50 nm or greater but 100 µm or less, more preferably 100 nm or greater but 50 µm or less, and even more preferably 120 nm or greater but 10 µm or less. The average thickness of the electron-transporting layer within the above-mentioned preferable range is advantageous because a sufficient amount of the photosensitization compound per unit projection area can be secured, a high capturing rate of light can be maintained, dispersion distances of injected electrons tend not to be increased, and loss of electric charge due to recombination can be reduced.

A production method of the electron-transporting layer is not particularly limited, and may be appropriately selected depending on the intended purpose. Examples of the production method thereof include a method where a film is formed in vacuum, such as sputtering, and a wet film formation method. Among the above-listed examples, a wet film formation method is preferable, and a method where a powder or sol of a semiconductor material is dispersed to prepare a dispersion liquid, and the dispersion liquid is applied onto the first electrode serving as an electron collector electrode substrate or the hole-blocking layer is more preferable.

The wet film formation method is not particularly limited, and may be appropriately selected depending on the intended purpose. Examples thereof include dip coating, spray coating, wire bar coating, spin coating, roller coating, blade coating, and gravure coating.

As the wet printing method, various methods, such as relief printing, offset printing, gravure printing, intaglio printing, rubber plate printing, and screen printing, may be used.

A method for preparing a dispersion liquid of the semiconductor material is not particularly limited, and may be appropriately selected depending on the intended purpose. Examples thereof include a method including mechanical pulverizing using a milling device known in the art. According to the above-mentioned preparation method, particles of the semiconductor material alone, or a mixture of the semiconductor material and a resin are dispersed in water or a solvent to prepare a dispersion liquid of the semiconductor material.

Examples of the resin include a polymer or copolymer of a vinyl compound (e.g., styrene, vinyl acetate, acrylic acid ester, and methacrylic acid ester), a silicone resin, a phenoxy resin, a polysulfone resin, a polyvinyl butyral resin, a polyvinyl formal resin, a polyester resin, a cellulose ester resin, a cellulose ether resin, an urethane resin, a phenol resin, an epoxy resin, a polycarbonate resin, a polyarylate resin, a polyamide resin, and a polyimide resin. The above-listed examples may be used alone or in combination.

Examples of the solvent include water, an alcohol solvent, a ketone solvent, an ester solvent, an ether solvent, an amide solvent, a halogenated hydrocarbon solvent, and a hydrocarbon solvent.

Examples of the alcohol solvent include methanol, ethanol, isopropyl alcohol, and α-terpineol.

Examples of the ketone solvent include acetone, methyl ethyl ketone, and methyl isobutyl ketone.

Examples of the ester solvent include ethyl formate, ethyl acetate, and n-butyl acetate.

Examples of the ether solvent include diethyl ether, dimethoxy ethane, tetrahydrofuran, dioxolane, and dioxane.

Examples of the amide solvent include N,N-dimethylformamide, N,N-dimethylacetamide, and N-methyl-2-pyrrolidone.

Examples of the halogenated hydrocarbon solvent include dichloromethane, chloroform, bromoform, methyl iodide, dichloroethane, trichloroethane, trichloroethylene, chlorobenzene, o-dichlorobenzene, fluorobenzene, bromobenzene, iodobenzene, and 1-chloronaphthalene.

Examples of the hydrocarbon solvent include n-pentane, n-hexane, n-octane, 1,5-hexadiene, cyclohexane, methylcyclohexane, cyclohexadiene, benzene, toluene, o-xylene, m-xylene, p-xylene, ethylbenzene, and cumene.

The above-listed examples may be used alone or in combination.

In order to prevent re-aggregation of particles, an acid, a surfactant, or a chelating agent may be added to a dispersion liquid including the particles of the semiconductor material or a paste including the particles of the semiconductor material obtained by a sol-gel method.

Examples of the acid include hydrochloric acid, nitric acid, and acetic acid.

Examples of the surfactant include polyoxyethylene octylphenyl ether.

Examples of the chelating agent include acetyl acetone, 2-aminoethanol, and ethylene diamine.

Moreover, to add a thickening agent is also effective for the purpose of improving film formability.

Examples of the thickening agent include polyethylene glycol, polyvinyl alcohol, and ethyl cellulose.

After applying the semiconductor material, firing or irradiation of microwaves or electron beams may be performed in order to electrically connect between the particles of the semiconductor material to improve a film strength or adhesion with the substrate. One of the above-mentioned treatments may be performed alone, or two or more of the above-mentioned treatments may be performed in combination.

When the firing of the electron-transporting layer including the semiconductor material is performed, the firing temperature is not particularly limited, and may be appropriately selected depending on the intended purpose. When the firing temperature is too high, resistance of the substrate may be increased or the substrate may be melted. Therefore, the firing temperature is preferably 30°C or higher but 700°C or lower, and more preferably 100°C or higher but 600°C or lower. Moreover, the firing time is not particularly limited, and may be appropriately selected depending on the intended purpose. The firing time is preferably 10 minutes or longer but 10 hours or shorter.

When microwave irradiation is performed on the electron-transporting layer formed of the semiconductor material, the irradiation time is not particularly limited, and may be appropriately selected depending on the intended purpose. The irradiation time is preferably 1 hour or shorter. The irradiation may be performed from the side where the electron-transporting layer is formed, or may be performed from the opposite side where the electron-transporting layer is not formed.

In order to increase a surface area of the electron-transporting layer or improve an electron injection efficiency to the below-described photosensitization compound, for example, chemical plating using n aqueous solution of titanium tetrachloride or a mixed solution with an organic solvent, or electrochemical plating using an aqueous solution of titanium trichloride may be performed after firing the electron-transporting layer formed of the semiconductor material.

A film obtained by firing the particles of the semiconductor material having diameter of several tens nanometers forms a porous state. The film having the porous structure has an extremely large surface area, and the surface area thereof can be represented with a roughness factor. The roughness factor is a numerical value representing an actual area of the inner side of pores relative to an area of the semiconductor particles applied on the first substrate. Accordingly, the larger roughness factor is more preferable. Considering the relationship with the average thickness of the electron-transporting layer, the roughness factor is preferably 20 or greater.

Moreover, the particles of the electron-transporting material may be doped with a lithium compound. Specifically, the doping may be performed by applying a solution of a lithium bis(trifluoromethane sulfone imide) compound onto the particles of the electron-transporting material through spin coating etc., followed by firing.

The lithium compound is not particularly limited, and may be appropriately selected depending on the intended purpose. Examples of the lithium compound include lithium bis(trifluoromethane sulfone imide), lithium bis(fluoromethane sulfone imide), lithium bis(fluoromethane sulfonyl)(trifluoromethanesulfonyl)imide, lithium perchlorate, and lithium iodide.

### <First and second photosensitization compounds>

In the present disclosure, the first photosensitization compound in the first photoelectric conversion section is different from the second photosensitization compound in the second photoelectric conversion section. In the present specification, being different means a compound used as the first photosensitization compound is different from a compound used as the second photosensitization compound. Since the first photosensitization compound in the first photoelectric conversion section is different from the second photosensitization compound in the second photoelectric conversion section, the photoelectric conversion element has an advantage that the photoelectric conversion element can absorb light that is not absorbed by one of the photoelectric conversion sections, and the photoelectric conversion element can absorb light of the wide wavelength range.

In order to further improve the conversion efficiency, the first photosensitization compound is adsorbed on a surface of the electron-transporting semiconductor of the first electron-transporting layer, and the second photosensitization compound is adsorbed on a surface of the electron-transporting semiconductor of the second electron-transporting layer in the present disclosure.

The first and second photosensitization compounds are not particularly limited as long as the photosensitization compound is a compound that is photoexcited by excitation light to be used, and may be appropriately selected depending on the intended purpose. Examples thereof include: metal complex compounds disclosed in Japanese Translation of PCT International Application Publication No. 07-500630, Japanese Unexamined Patent Application Publication No. 10-233238, Japanese Unexamined Patent Application Publication No. 2000-26487, Japanese Unexamined Patent Application Publication No. 2000-323191, and Japanese Unexamined Patent Application Publication No. 2001-59062; coumarine compounds disclosed in Japanese Unexamined Patent Application Publication No. 10-93118, Japanese Unexamined Patent Application Publication No. 2002-164089, Japanese Unexamined Patent Application Publication No. 2004-95450, and J. Phys. Chem. C, 7224, Vol. 111 (2007); polyene compounds disclosed in Japanese Unexamined Patent Application Publication No. 2004-95450, and Chem. Commun., 4887 (2007); indoline compounds disclosed in Japanese Unexamined Patent Application Publication No. 2003-264010, Japanese Unexamined Patent Application Publication No. 2004-63274, Japanese Unexamined Patent Application Publication No. 2004-115636, Japanese Unexamined Patent Application Publication No. 2004-200068, Japanese Unexamined Patent Application Publication No. 2004-235052, J. Am. Chem. Soc., 12218, Vol. 126 (2004), Chem. Commun.,3036 (2003), and Angew. Chem. Int. Ed., 1923, Vol. 47 (2008); thiophene compounds disclosed in J. Am. Chem. Soc., 16701, Vol. 128 (2006), and J. Am. Chem. Soc., 14256, Vol. 128 (2006); cyanine dyes disclosed in Japanese Unexamined Patent Application Publication No. 11-86916, Japanese Unexamined Patent Application Publication No. 11-214730, Japanese Unexamined Patent Application Publication No. 2000-106224, Japanese Unexamined Patent Application Publication No. 2001-76773, and Japanese Unexamined Patent Application Publication No. 2003-7359; merocyanine dyes disclosed in Japanese Unexamined Patent Application Publication No. 11-214731, Japanese Unexamined Patent Application Publication No. 11-238905, Japanese Unexamined Patent Application Publication No. 2001-52766, Japanese Unexamined Patent Application Publication No. 2001-76775, and Japanese Unexamined Patent Application Publication No. 2003-7360; 9-arylxanthene compounds disclosed in Japanese Unexamined Patent Application Publication No. 10-92477, Japanese Unexamined Patent Application Publication No. 11-273754, Japanese Unexamined Patent Application Publication No. 11-273755, and Japanese Unexamined Patent Application Publication No. 2003-31273; triarylmethane compounds disclosed in Japanese Unexamined Patent Application Publication No. 10-93118, and Japanese Unexamined Patent Application Publication No. 2003-31273; phthalocyanine compounds disclosed in Japanese Unexamined Patent Application Publication No. 09-199744, Japanese Unexamined Patent Application Publication No. 10-233238, Japanese Unexamined Patent Application Publication No. 11-204821, Japanese Unexamined Patent Application Publication No. 11-265738, J. Phys. Chem., 2342, Vol. 91 (1987), J. Phys. Chem. B, 6272, Vol. 97 (1993), Electroanal. Chem., 31, Vol. 537 (2002), Japanese Unexamined Patent Application Publication No. 2006-032260, J. Porphyrins Phthalocyanines, 230, Vol. 3 (1999), Angew. Chem. Int. Ed., 373, Vol. 46 (2007), and Langmuir, 5436, Vol. 24 (2008); polyphyrin compounds; and D102, D131, and D358 available from MITSUBISHI PAPER MILLS LIMITED. The above-listed photosensitization compounds may be used alone or in combination.

Among the above-listed photosensitization compounds, the metal complex compounds, the coumarine compounds, the polyene compounds, the indoline compounds, and the thiophene compounds are preferable, and D102, D131, and D358 available from MITSUBISHI PAPER MILLS LIMITED are also preferable.

Particularly, a compound represented by General Formula (1) can achieve high output of a solid dye-sensitized solar battery cell.

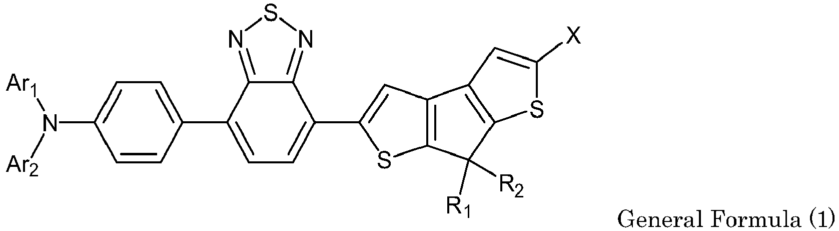

In General Formula (1), Ar₁ and Ar₂ are each an aryl group; R₁ and R₂ are each a C4-C10 straight-chain or branched-chain alkyl group; and X is a group represented by any of the following structural formulae.

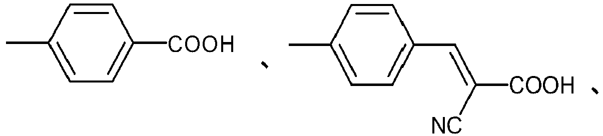

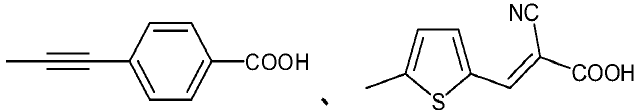

Moreover, a compound represented by General Formula (2) below can achieve high output in an environment of low to high illuminance.

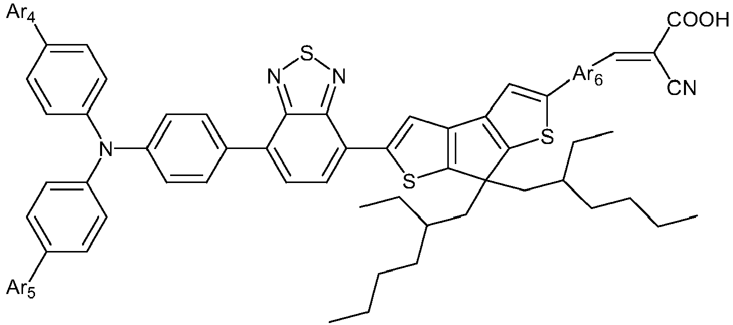

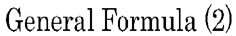

In General Formula (2), Ar₄ and Ars are each a phenyl group or naphthayl group that may have a substituent; and Ar₆ is a phenyl group or a thiophene group.

Specific examples of the substituent include an alkyl group, and an alkoxy group.

Specific exemplary compounds of the photosensitization compounds represented by General Formulae (1) and (2) are listed below, but the photosensitization compound for use in the present disclosure is not limited to the following exemplary compounds.

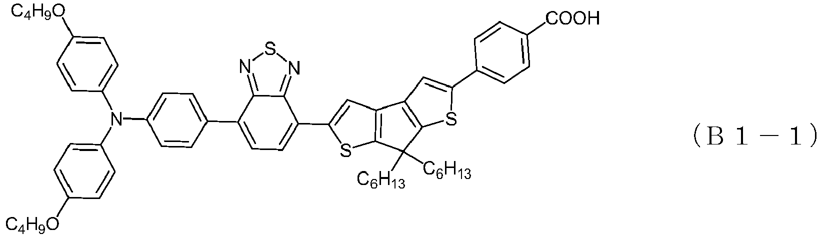

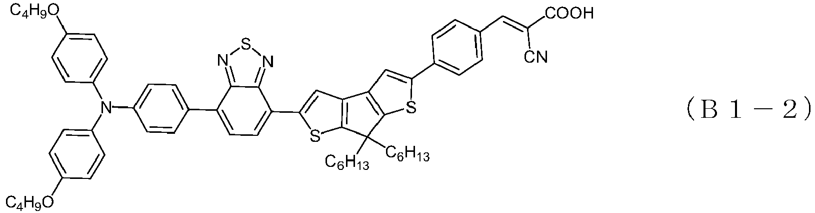

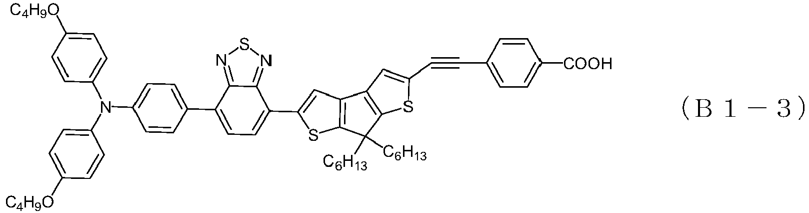

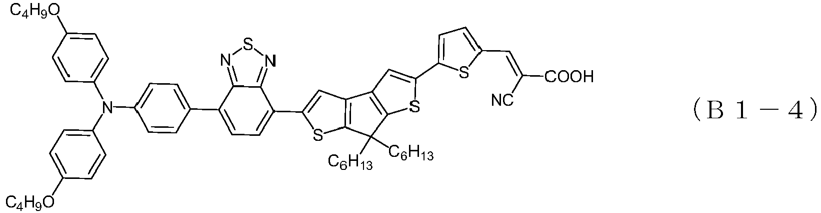

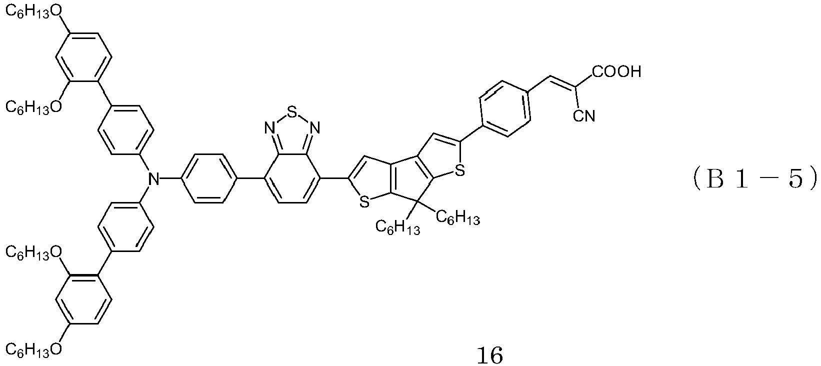

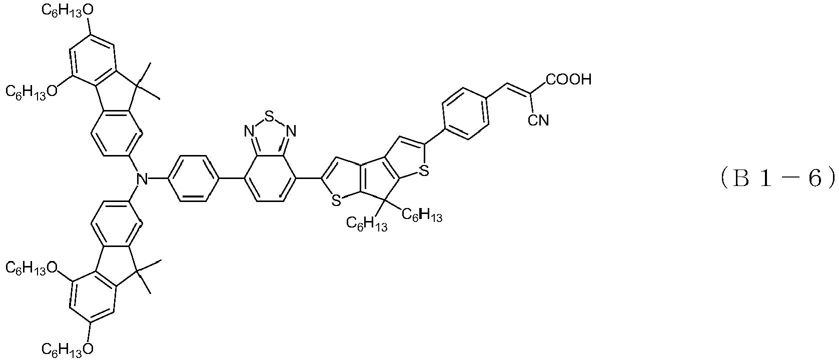

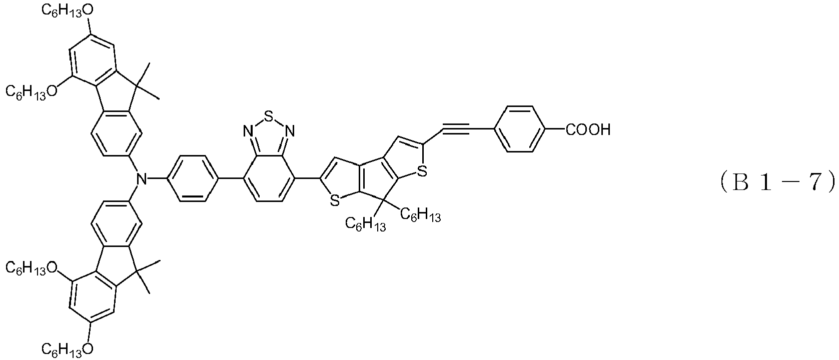

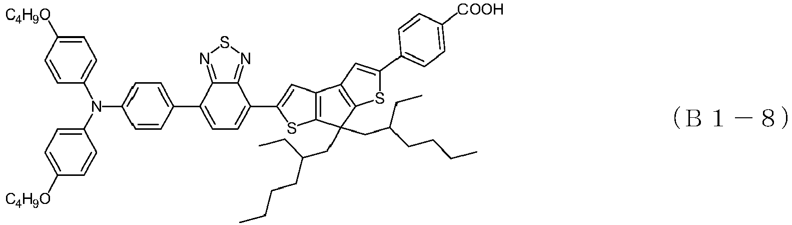

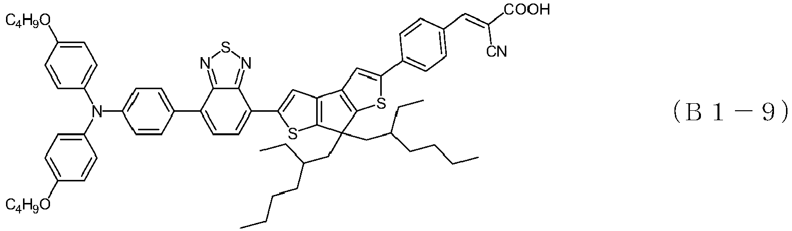

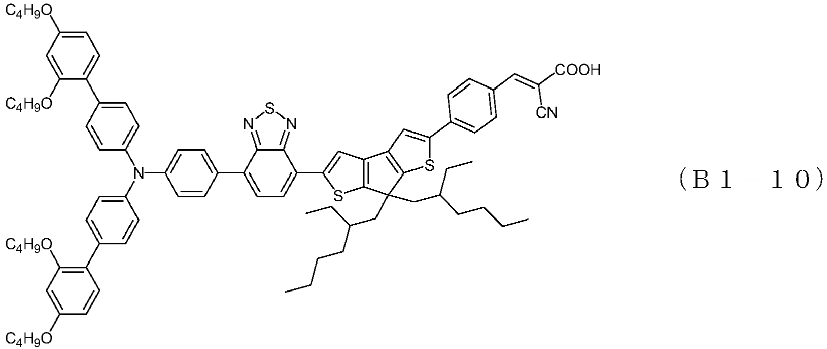

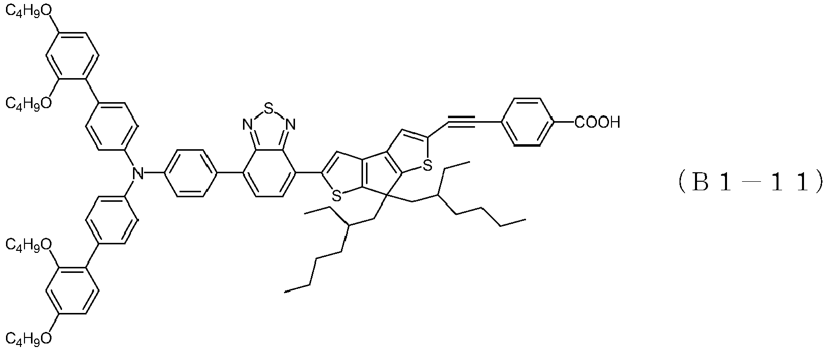

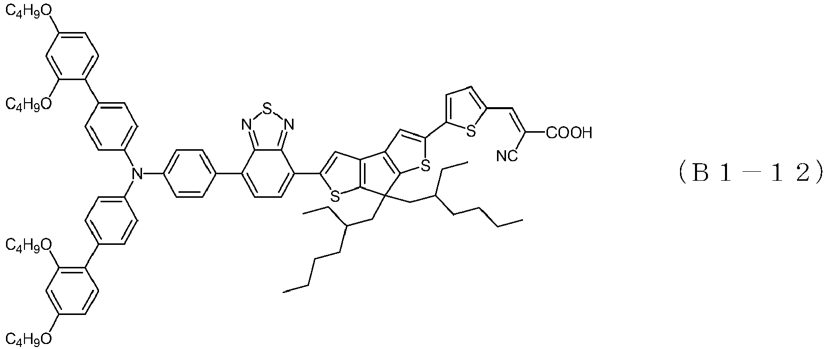

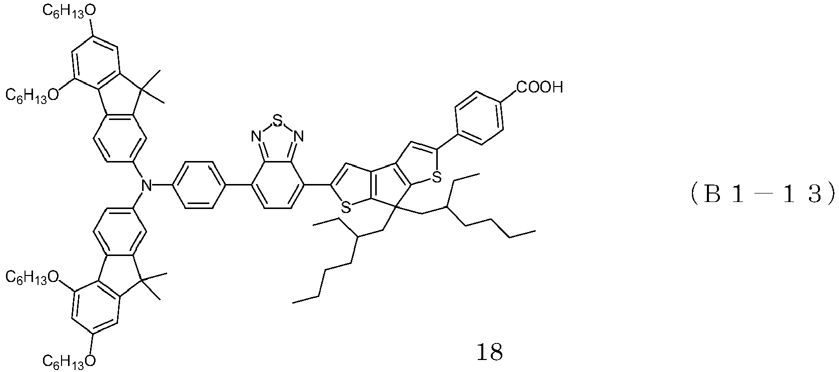

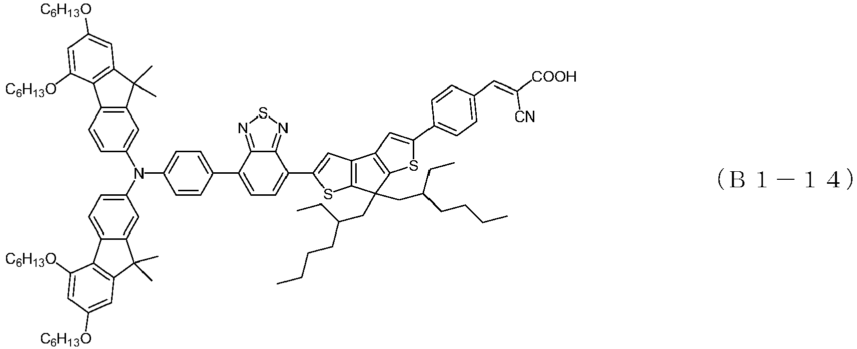

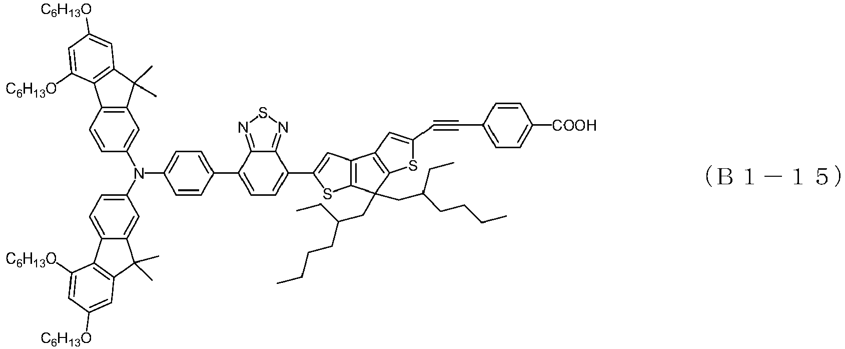

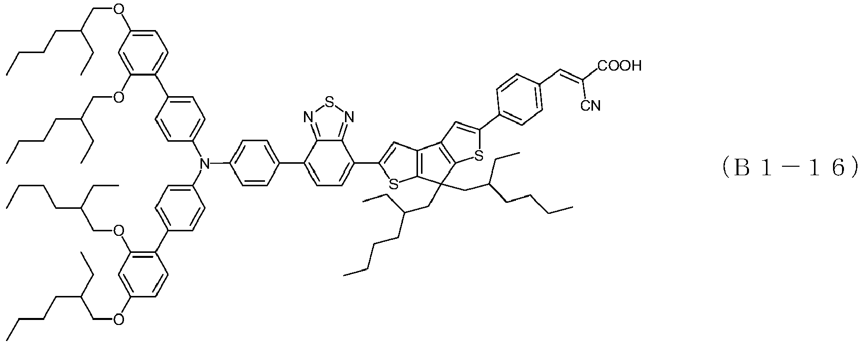

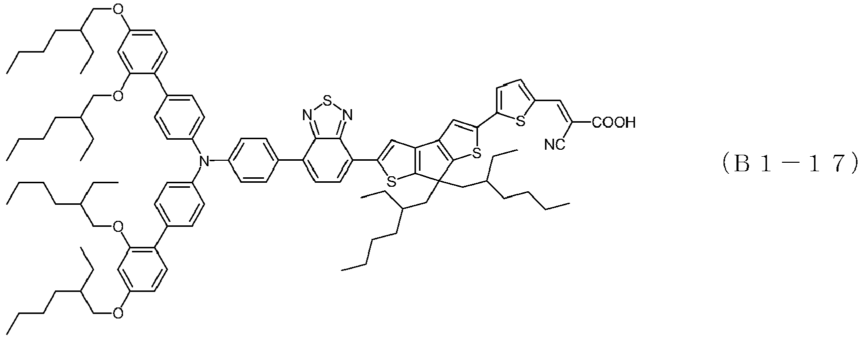

In the state where the compound represented by General Formula (1) or (2) and the compound represented by General Formula (3) are mixed together and adsorbed on the semiconductor material, moreover, a resultant solid dye-sensitized solar battery cell can yield high output, especially in a high temperature environment.

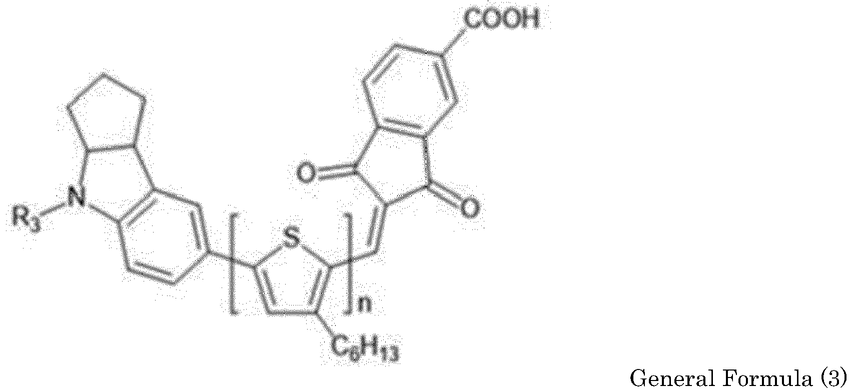

In General Formula (3), n is an integer of 0 or 1; and R₃ is an aryl group, or any of substituents represented by the following structural formulae.

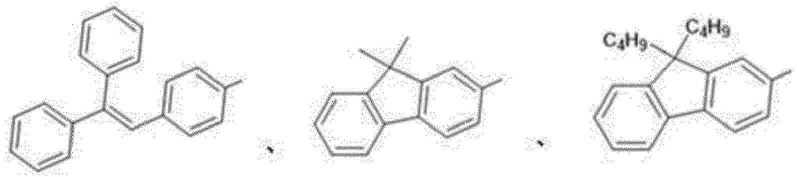

Specific exemplary compounds of the photosensitization compound represented by General Formula (3) are listed below, but the photosensitization compound for use in the present disclosure is not limited to the following exemplary compounds.

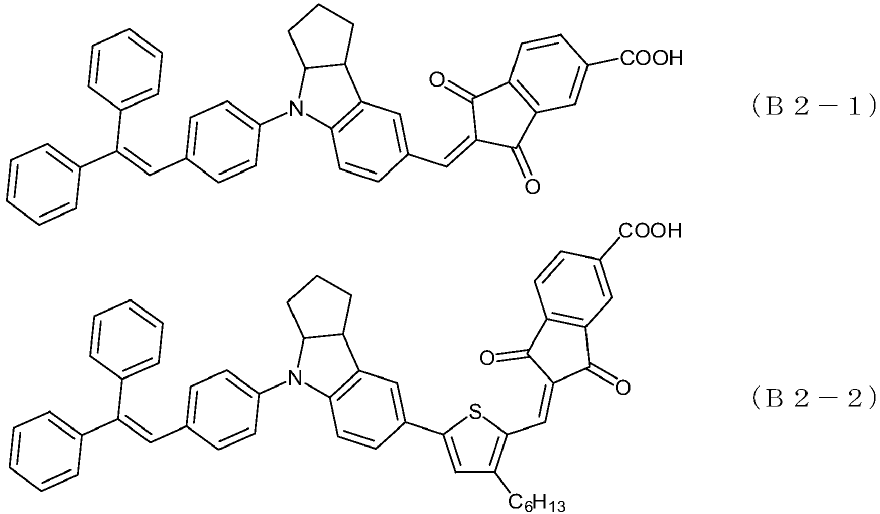

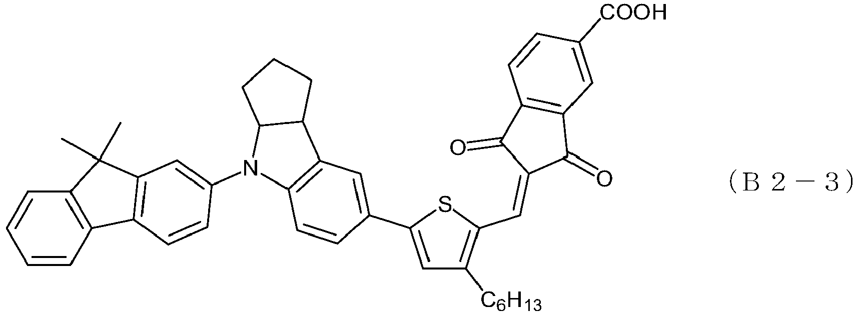

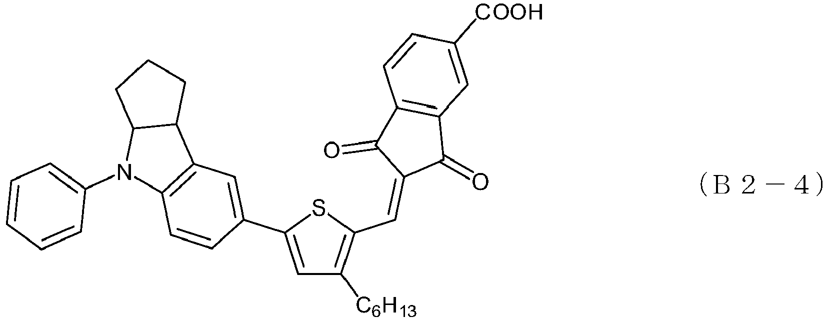

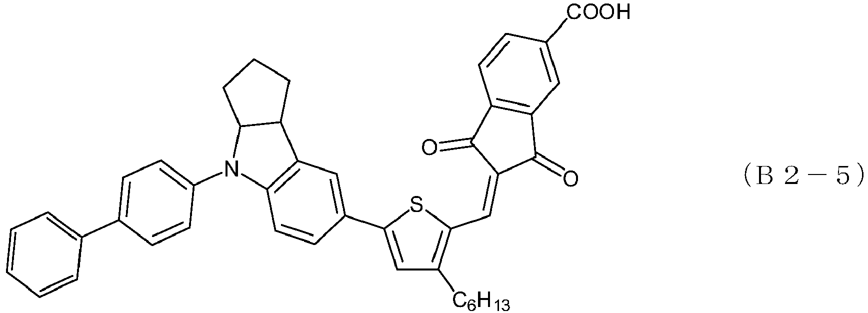

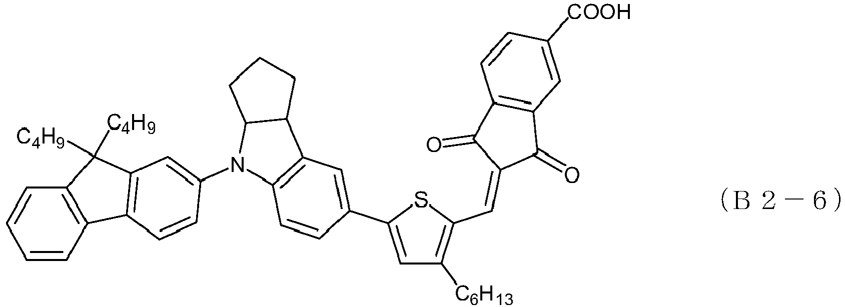

As a method for adsorbing the first photosensitization compound on the surface of the semiconductor material of the first electron-transporting layer, or adsorbing the second photosensitization compound on the surface of the semiconductor material of the second electron-transporting layer, usable methods are a method where the electron-transporting layer including the semiconductor material is immersed in a solution or dispersion liquid of the photosensitization compound, and a method where a solution or dispersion liquid of the photosensitization compound is applied onto the electron-transporting layer to allow the photosensitization compound to be adsorbed thereon.

When the electron-transporting layer including the semiconductor material is immersed in a solution or dispersion liquid of the first photosensitization compound, or a solution or dispersion liquid of the second photosensitization compound, immersion, dipping, roller coating, or air knife coating may be used. When a solution or dispersion liquid of the photosensitization compound is applied to the electron-transporting layer to allow the photosensitization compound to be adsorbed thereon, wire bar coating, slide hopper coating, extrusion coating, curtain coating, spin coating, or spray coating may be used. Moreover, adsorption may be performed in a supercritical fluid using carbon dioxide etc.

When the first or second photosensitization compound is allowed to be adsorbed on the semiconductor material, a condensing agent may be used.

The condensing agent may be an agent exhibiting a catalytic action to physically or chemically bond the photosensitization compound to the surface of the semiconductor material, or an agent exhibiting stoichiometric action to advantageously sift the chemical equilibrium. Moreover, thiol or a hydroxyl compound may be further added as a condensation aid.

Examples of a solvent for dissolving or dispersing the first and the second photosensitization compounds include water, an alcohol solvent, a ketone solvent, an ester solvent, an ether solvent, an amide solvent, a halogenated hydrocarbon solvent, and a hydrocarbon solvent.

Examples of the alcohol solvent include methanol, ethanol, and isopropyl alcohol.

Examples of the ketone solvent include acetone, methyl ethyl ketone, and methyl isobutyl ketone.

Examples of the ester solvent include ethyl formate, ethyl acetate, and n-butyl acetate.

Examples of the ether solvent include diethyl ether, dimethoxy ethane, tetrahydrofuran, dioxolane, and dioxane.

Examples of the amide solvent include N,N-dimethylformamide, N,N-dimethylacetamide, and N-methyl-2-pyrrolidone.

Examples of the halogenated hydrocarbon solvent include dichloromethane, chloroform, bromoform, methyl iodide, dichloroethane, trichloroethane, trichloroethylene, chlorobenzene, o-dichlorobenzene, fluorobenzene, bromobenzene, iodobenzene, and 1-chloronaphthalene.

Examples of the hydrocarbon solvent include n-pentane, n-hexane, n-octane, 1,5-hexadiene, cyclohexane, methylcyclohexane, cyclohexadiene, benzene, toluene, o-xylene, m-xylene, p-xylene, ethylbenzene, and cumene.

The above-listed examples may be used alone or in combination.

The first and second photosensitization compounds may function more effectively when aggregation between particles of each compound is prevented, although it depends on the photosensitization compound for use. Therefore, an aggregation dissociating agent may be used in combination. Examples of the aggregation dissociating agent include steroid compounds (e.g., cholic acid and chenodexycholic acid), long-chain alkyl carboxylic acid, and long-chain alkyl phosphonic acid. The aggregation dissociating agent is particularly preferably 4-hexyloxybenzoic acid, and 4-benzyloxybenzoic acid.

An amount of the aggregation dissociating agent is preferably 0.5 parts by mol or greater but 100 parts by mol or less, and more preferably 10 parts by mol or greater but 50 parts by mol or less, relative to 1 part by mol of the photosensitization compound.

A temperature at which the first and second photosensitization compounds or the aggregation dissociating agent is adsorbed on the surface of the semiconductor material constituting the electron-transporting layer is preferably -50°C or higher but 200°C or lower. The adsorption time is preferably 5 seconds or longer but 1,000 hours or shorter, more preferably 10 seconds or longer but 500 hours or shorter, and even more preferably 1 minute or longer but 150 hours or shorter. The adsorption is preferably performed in the dark. Moreover, the adsorption may be performed with standing still, or with stirring.

A method for the stirring is not particularly limited, and may be appropriately selected depending on the intended purpose. Examples thereof include methods using a stirrer, a ball mill, a paint conditioner, sand mill, Attritor, a disperser, or ultrasonic dispersion.

### <First and second hole-transporting layers>

The first hole-transporting layer and the second hole-transporting layer may have the same size, shape, structure, and material, or may have mutually different sizes, shapes, structures, and materials. The size, shape, structure, and material of the first hole-transporting layer are preferably identical to the size, shape, structure, and material of the second hole-transporting layer. The first and second hole-transporting layers may be collectively referred to as a hole-transporting layer hereinafter.

A material of the hole-transporting layer is not particularly limited as long as the material has hole-transporting capabilities, and any of known materials may be used. Examples thereof include an electrolytic solution obtained by dissolving a redox couple in an organic solvent, a gel electrolyte where a polymer matrix is impregnated with a liquid obtained by dissolving a redox couple in an organic solvent, a molten salt including a redox couple, a solid electrolyte, an inorganic hole-transporting material, and an organic hole-transporting material. Among the above-listed examples, the hole-transporting layer preferably includes a p-type semiconductor material, a basic compound, and an alkali metal salt.

The hole-transporting layer preferably includes an alkali metal salt. When the hole-transporting layer includes an alkali metal salt, output can be improved, and light irradiation resistance or high temperature storage stability can be improved. Examples of the alkali metal salt include (C-1) to (C-86), but the alkali metal salt that can be used in the present disclosure is not limited to the following (C1) to (C86). Among the below-listed examples, the alkali metal salt is preferably lithium salt, more preferably Li-TFSI <lithium bis(trifluoromethanesulfonylimide)>, and particularly preferably Li-FTFSI <lithium (fluoromethane sulfonyl)(trifluoromethanesulfonyl)imide>.

An amount of the alkali metal salt is preferably 5% by mol or greater but 50% by mol or less, and more preferably 20% by mol or greater but 35% by mol or less, relative to the hole-transporting material.

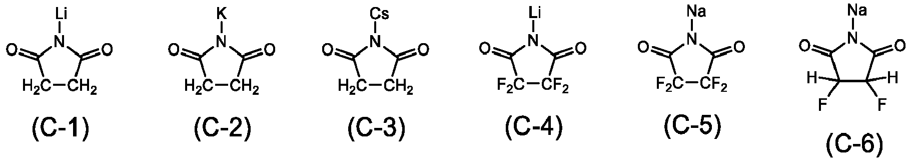

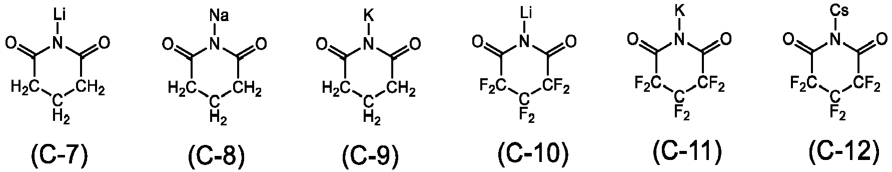

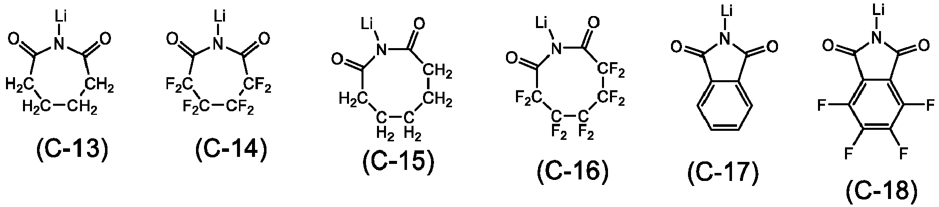

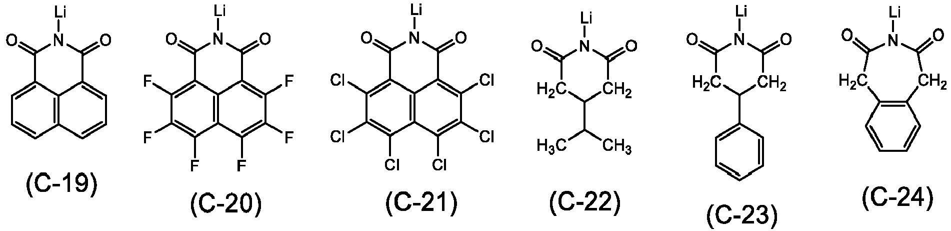

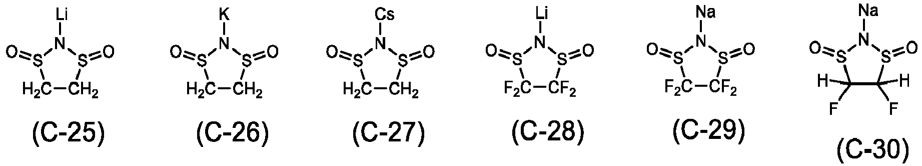

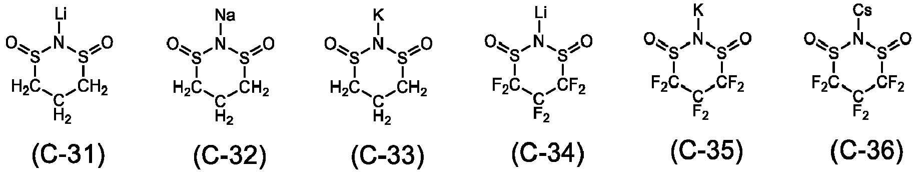

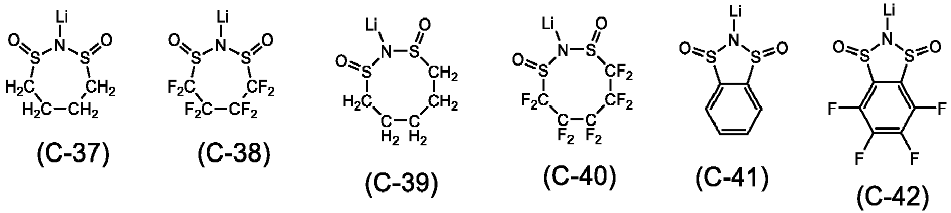

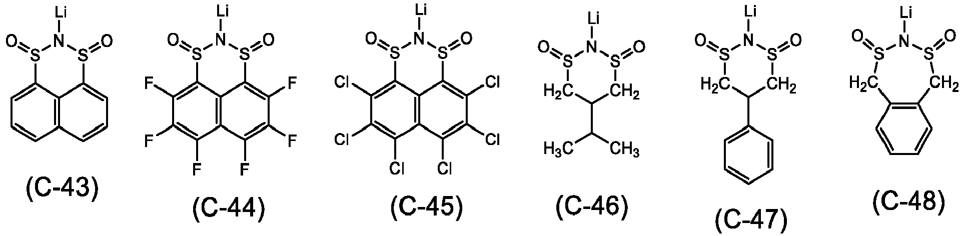

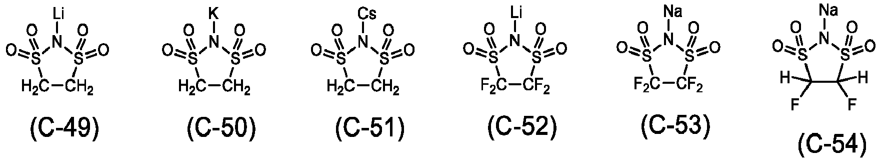

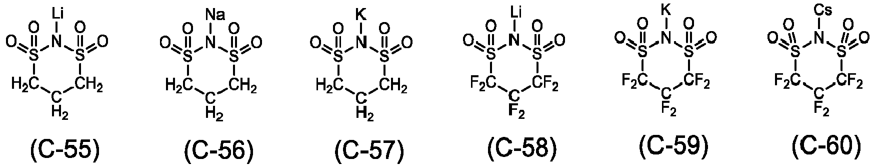

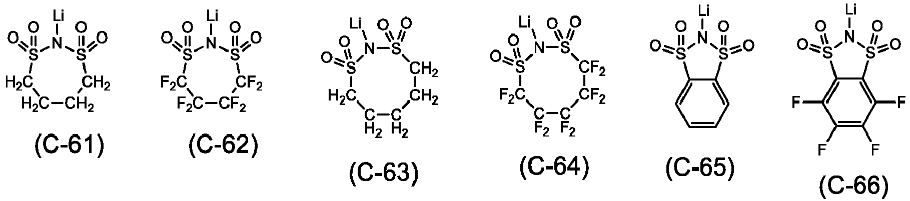

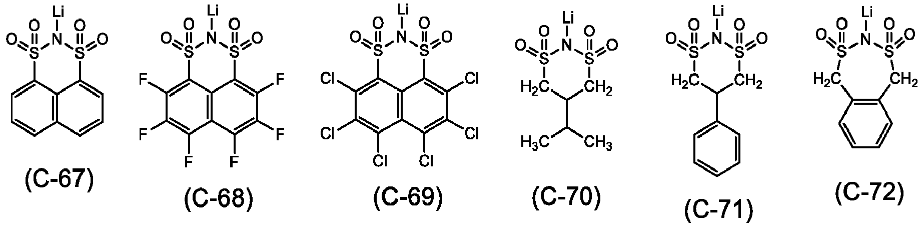

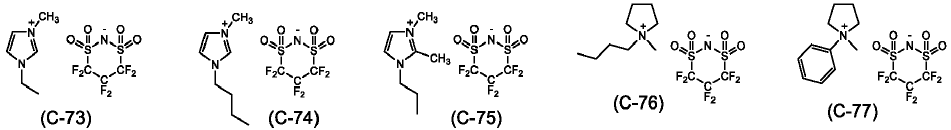

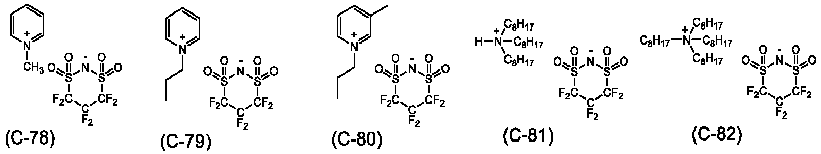

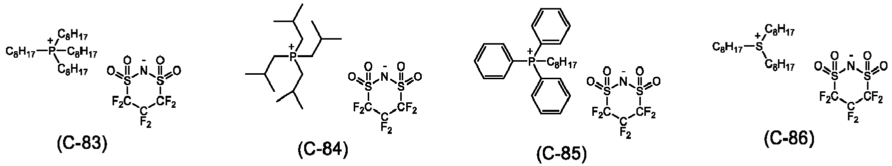

The hole-transporting layer preferably includes a basic compound represented by General Formula (4).

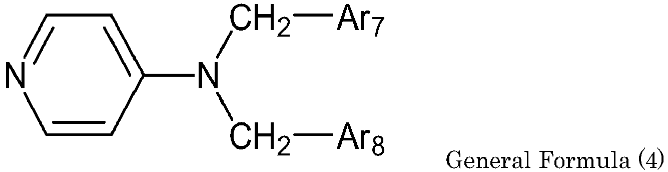

In General Formula (4), Ar₇ and Ars are each an aryl group that may have a substituent.

Examples of the aryl group include a phenyl group, a naphthyl group, and a biphenyl group. Specific examples of the substituent include an alkyl group, and an alkoxy group.

The hole-transporting layer preferably includes a basic compound represented by General Formula (4). Inclusion of the basic compound represented by General Formula (4) in the hole-transporting layer is advantageous because output stability of the photoelectric conversion element can be enhanced. Use of such basic compound in the hole-transporting layer is also advantageous particularly because variations in output characteristics against low-intensity light can be reduced, and power can gen stably generated.

Specific exemplary compounds of the basic compound represented by General Formula (4) will be listed below, but the basic compound for use in the present disclosure is not limited to the following exemplar compounds.

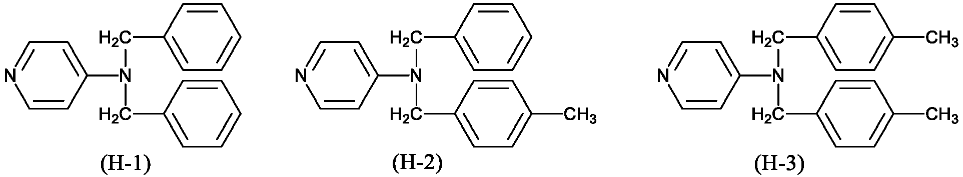

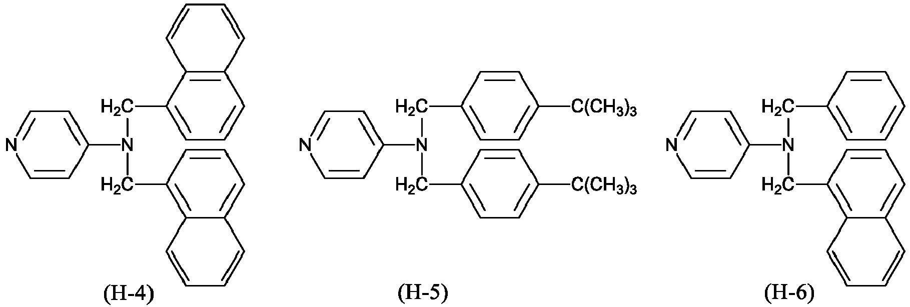

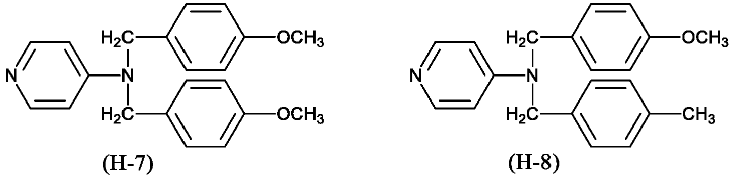

In addition to the compound represented by General Formula (4), a basic compound, such as 4-dimethylaminopyridine (DMAP), 4-pyrrolidinopyridine (PYP), 4-piperidinopyridine (PPP), and tert-butyl pyridine (TBP), is preferable.

An amount of the basic compound in the hole-transporting layer is preferably 20% by mol or greater but 65% by mol or less, and more preferably 35% by mol or greater but 50% by mol or less, relative to the hole-transporting material. When the amount of the basic compound is within the above-mentioned preferable range, high open circuit voltage can be maintained, high output can be obtained, and high stability and durability are obtained even when the photoelectric conversion element is used for a long period in various environments.

In order to impart a function of transporting holes to the hole-transporting layer, a hole transporting material or a p-type semiconductor material is added to the hole-transporting layer. As the hole transporting material or p-type semiconductor material, any of organic hole-transporting compounds known in the art may be used. Specific examples thereof include an oxadiazole compound, a triphenylmethane compound, a pyrazoline compound, a hydrazine compound, an oxadiazole compound, a tetraarylbenzidine compound, a stilbene compound, and a spiro compound. Among the above-listed examples, the spiro compound is more preferable.

The spiro compound is preferably a compound represented by General Formula (5).

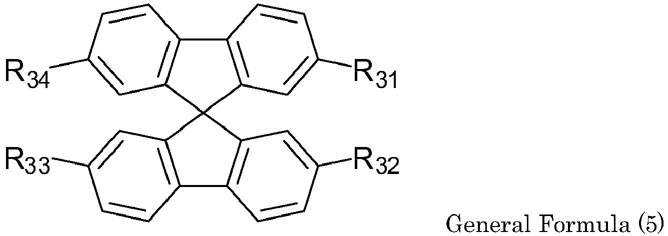

In General Formula (5), R₃₁ to R₃₄ are each a substituted amino group, such as a dimethylamino group, a diphenylamino group, and a naphthyl-4-tolylamino group.

Specific examples of the spiro compound include (D-1) to (D-20) below, but the spiro compound that can be used in the present disclosure is not limited to the following (D-1) to (D-20).

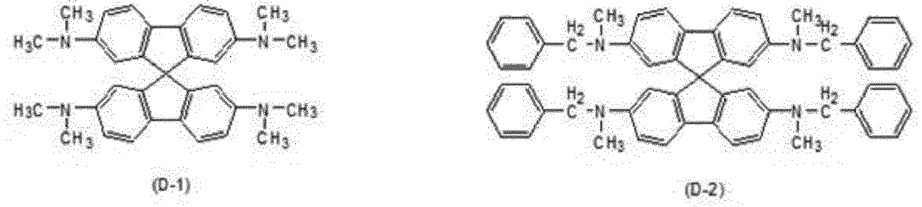

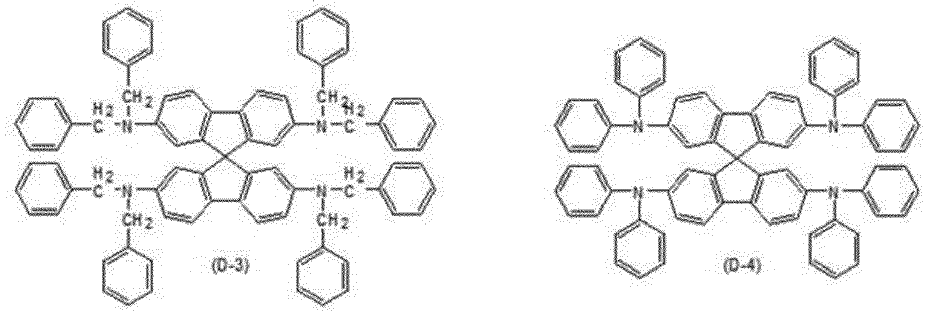

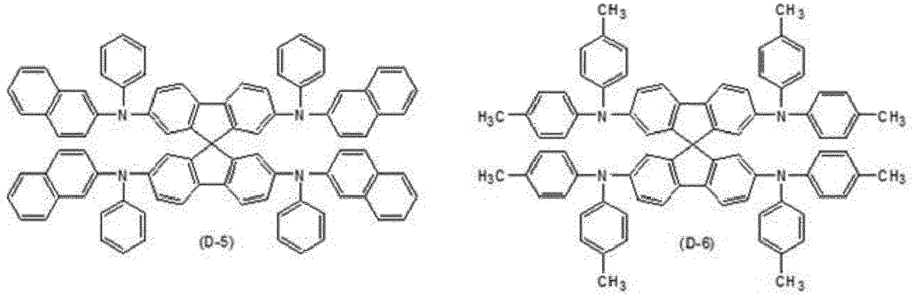

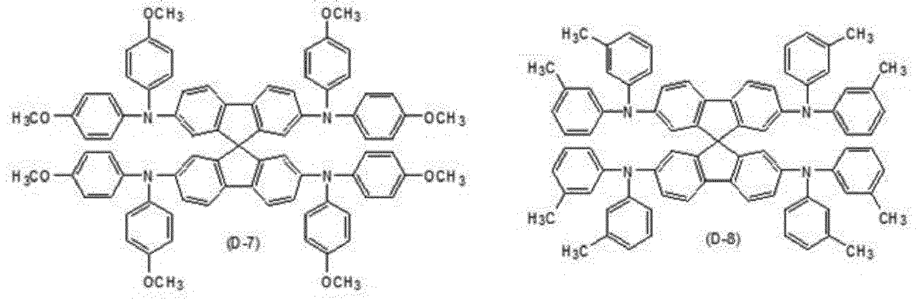

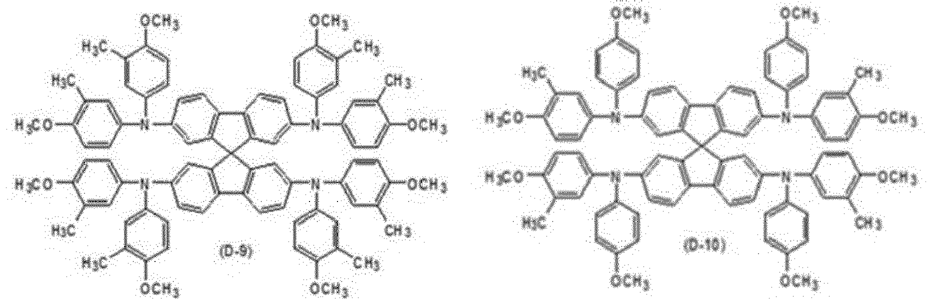

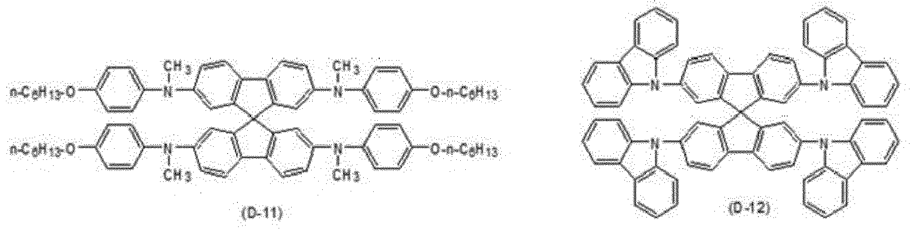

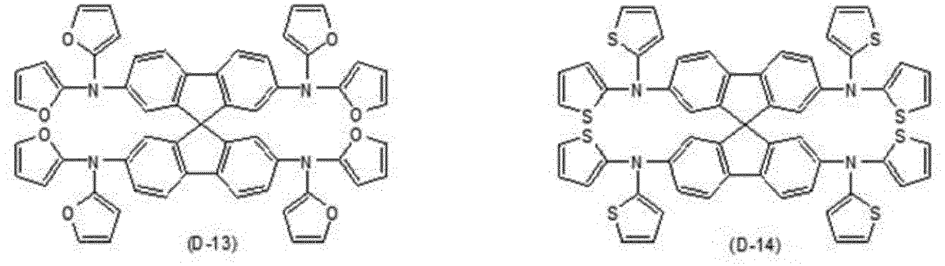

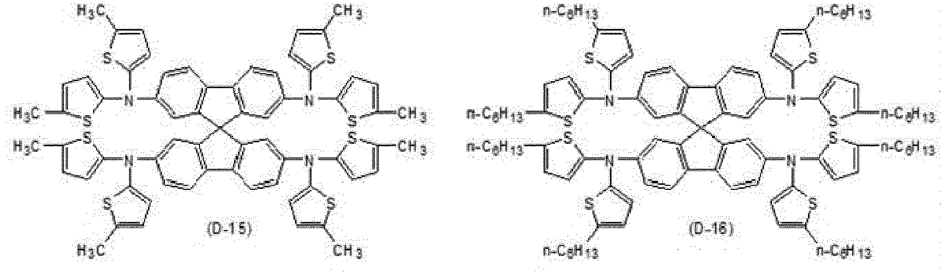

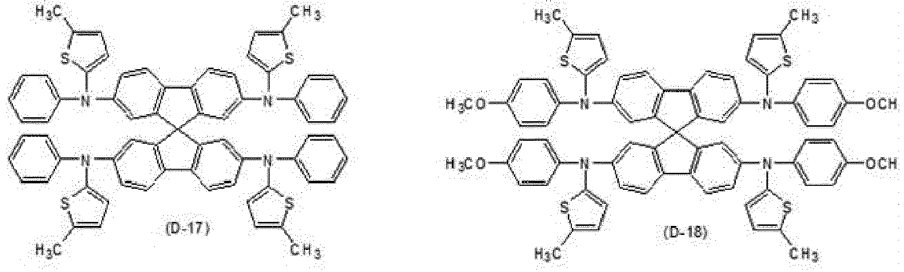

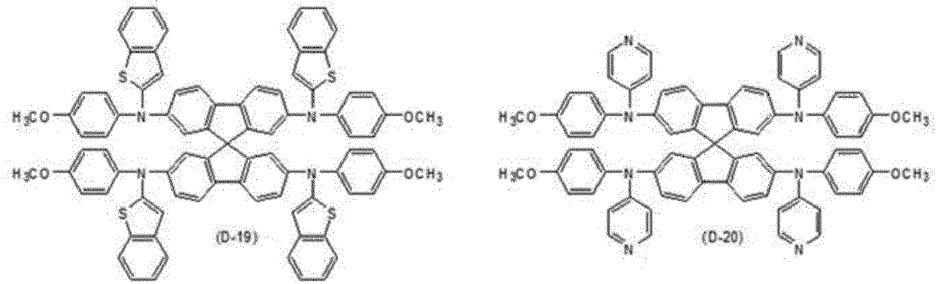

Since the above-listed spiro compounds have high hole mobility and have two benzidine skeleton molecules spirally bonded together, a nearly spherical electron cloud is formed, and excellent photoelectric conversion characteristics are exhibited due to excellent hopping conductivity between molecules. Moreover, the spiro compounds are dissolved in various organic solvents because of high solubility. Since the spiro compounds are amorphous (amorphous substances that do not have a crystal structure), the spiro compounds tend to be densely filled in the porous electron-transporting layer. Furthermore, the spiro compounds do not absorb light of 450 nm or longer, and therefore light is effectively absorbed by the photosensitization compound, which is particularly preferable for a solid dye-sensitized solar battery cell.

In addition to the hole-transporting material and the basic compound, the hole-transporting layer preferably includes an oxidizing agent. When the hole-transporting layer includes the oxidizing agent, conductivity is improved, and durability or stability of output characteristics of the photoelectric conversion element can be enhanced.

Examples of the oxidizing agent include tris(4-bromophenyl)aluminium hexachloroantimonate, silver hexafluoroantimonate, nitrosonium tetrafluoroborate, silver nitrate, metal complexes, and hypervalent iodine compounds. Among the above-listed examples, a metal complex is more preferable. Moreover, 4-isopropyl-4'-methyldiphenyliodonium tetrakis(pentafluorophenyl)borate that is a hypervalent iodine compound is more preferable. Use of a metal complex or a hypervalent iodine compound as the oxidizing agent is advantageous because the oxidizing agent has high solubility to an organic solvent, and therefore a large amount thereof can be added.

The metal complex includes a metal cation, a ligand, and an anion.

Examples of the metal cation include cations of, for example, chromium, manganese, iron, cobalt, nickel, copper, molybdenum, ruthenium, rhodium, palladium, silver, tungsten, rhenium, osmium, iridium, gold, and platinum. Among the above-listed examples, cations of iron, cobalt, nickel, and copper are preferable, and a cation of cobalt is more preferable. That is, the metal complex is more preferably a cobalt complex. The ligand preferably includes a 5-membered heterocycle and/or a 6-membered heterocycle including at least one nitrogen, and may include a substituent. Specific examples thereof include, but are not limited to, the following compounds.

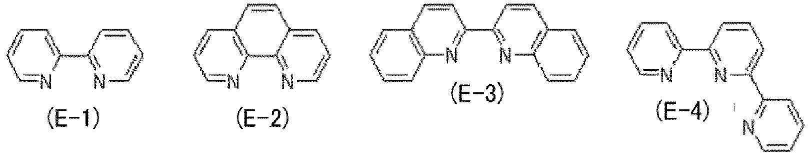

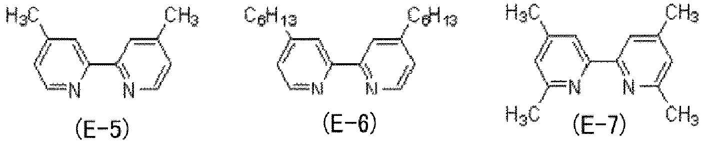

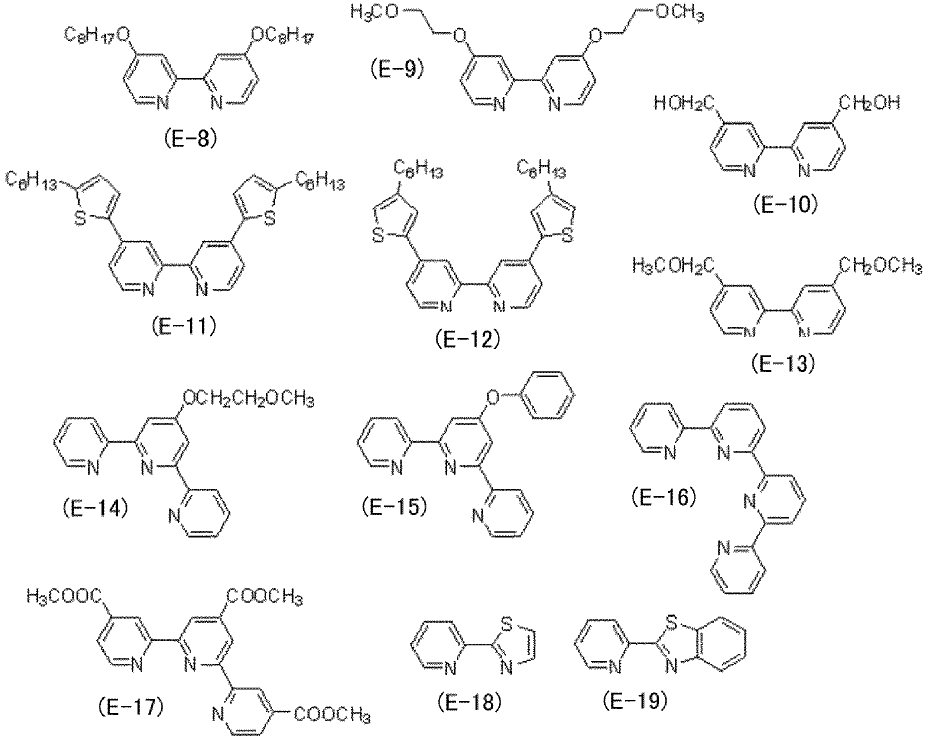

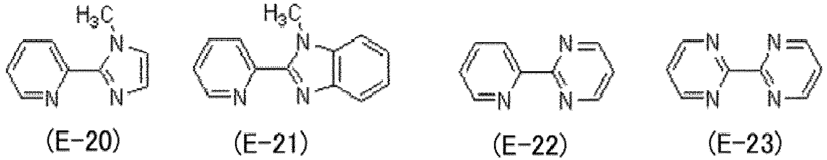

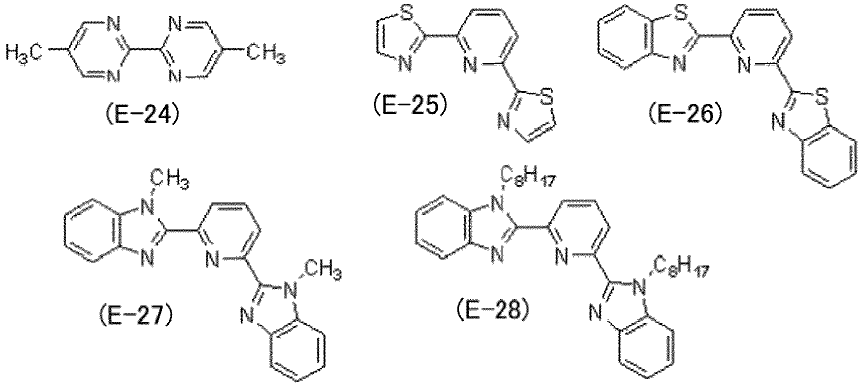

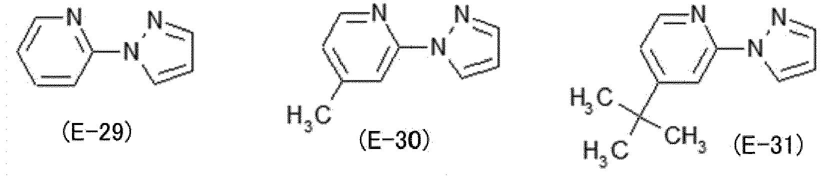

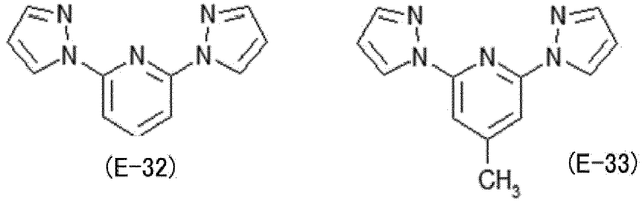

Examples of the anion include a hydride ion (H⁻), a fluoride ion (F⁻), a chloride ion (Cl⁻), a bromide ion (Br⁻), an iodide ion (I⁻), a hydroxide ion (OH⁻), a cyanide ion (CN⁻), a nitric acid ion (NO₃⁻), a nitrous acid ion (NO₂⁻), a hypochlorous acid ion (ClO⁻), a chlorous acid ion (ClO₂⁻), a chloric acid ion (ClO₃⁻), a perchloric acid ion (ClO₄⁻), a permanganic acid ion (MnO₄⁻), an acetic acid ion (CH₃COO⁻), a hydrogen carbonate ion (HCO₃⁻), a dihydrogen phosphate ion (H₂PO₄⁻), a hydrogen sulfate ion (HSO₄⁻), a hydrogen sulfide ion (HS⁻), a thiocyanic acid ion (SCN⁻), a tetrafluoroboric acid ion (BF₄⁻), a hexafluorophosphate ion (PF₆⁻), a tetracyanoborate ion (B(CN)₄⁻), a dicyanoamine ion (N(CN)₂⁻), a p-toluenesulfonic acid ion (TsO⁻), a trifluoromethyl sulfonate ion (CF₃SO₂⁻), a bis(trifluoromethylsulfonyl)amine ion (N(SO₂CF₃)₂⁻), a tetrahydroxoaluminate ion ([Al(OH)₄]⁻ or [Al(OH)₄(H₂O)₂]⁻), a dicyanoargentate(I) ion ([Ag(CN)₂]⁻), a tetrahydroxochromate(III) ion ([Cr(OH)₄]⁻), a tetrachloroaurate(III) ion ([AuCl₄]⁻), an oxide ion (O²⁻), a sulfide ion (S²⁻), a peroxide ion (O₂²⁻), a sulfuric acid ion (SO₄²⁻), a sulfurous acid ion (SO₃²⁻), a thiosulfuric acid (S₂O₃²⁻), a carbonic acid ion (CO₃²⁻), a chromic acid ion (CrO₄²⁻), a dichromic acid ion (Cr₂O₇²⁻), a monohydrogen phosphate ion (HPO₄²⁻), a tetrahydroxozincate(II) ion ([Zn(OH)₄]²⁻), a tetracyanozincate(II) ion ([Zn(CN)₄]²⁻), a tetrachlorocuprate(II) ion ([CuCl₄]²⁻), a phosphoric acid ion (PO₄³⁻), a hexacyanoferrate(III) ion ([Fe(CN)₆]³⁻), a bis(thiosulfate)argentate(I) ion ([Ag(S₂O₃)₂]³⁻), and a hexacyanoferrate(II) ion ([Fe(CN)₆]⁴⁻). The above-listed examples may be used alone or in combination. Among the above-listed examples, a tetrafluoroboric acid ion, a hexafluorophosphate ion, a tetracyanoborate ion, a bis(trifluoromethylsulfonyl)amine ion, and a perchloric acid ion are preferable.

Among the above-mentioned metal complexes, trivalent cobalt complexes represented by Structural Formulae (8) and (9) below are preferable. Use of the trivalent cobalt complex as the metal complex is advantageous because the hole-transporting material can be oxidized.

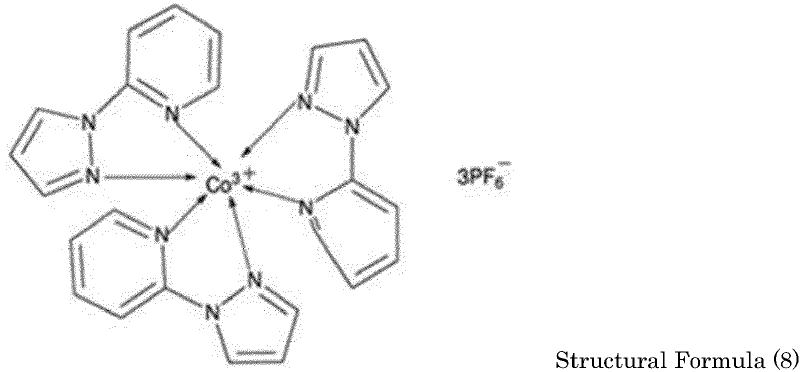

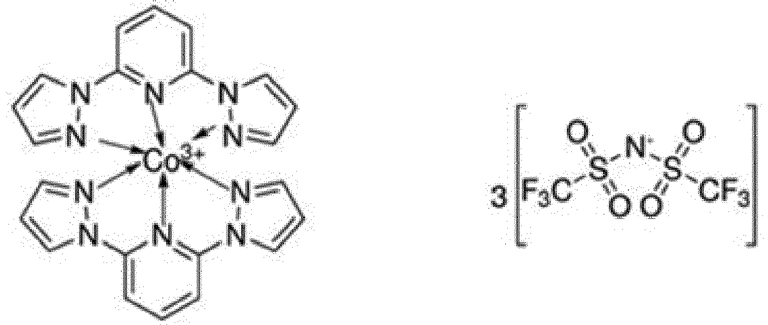

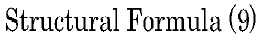

The metal complex is more preferably a trivalent cobalt complex represented by General Formula (6) below.

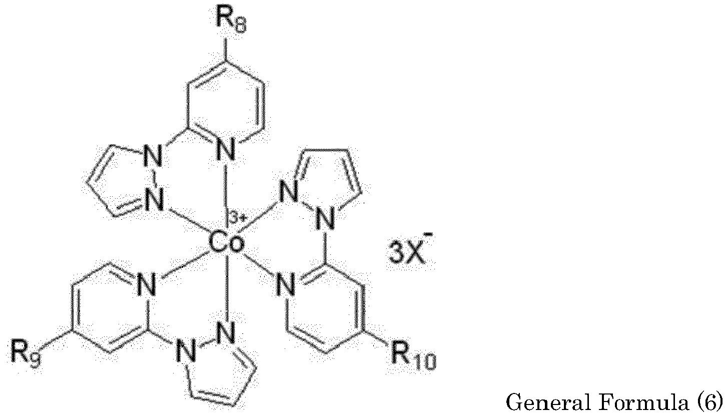

In General Formula (6), Rs to R₁₀ are each a hydrogen atom, a methyl group, an ethyl group, a tert-butyl group, or a trifluoromethy group; and X⁻ is any of the above-mentioned monovalent anions.

Specific examples of the cobalt complex represented by General Formula (6) will be listed below, but the cobalt complex that can be used is not limited to the following specific examples. The below-listed examples may be used alone or in combination.

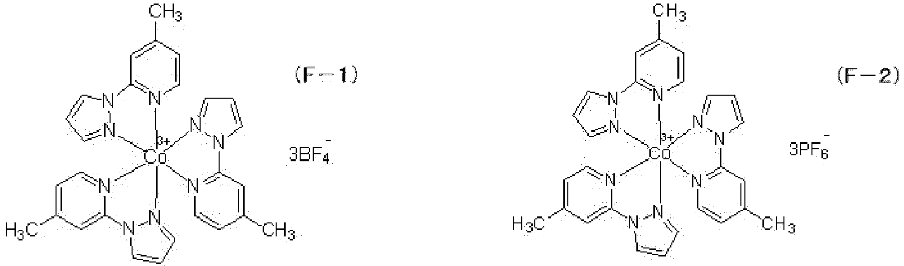

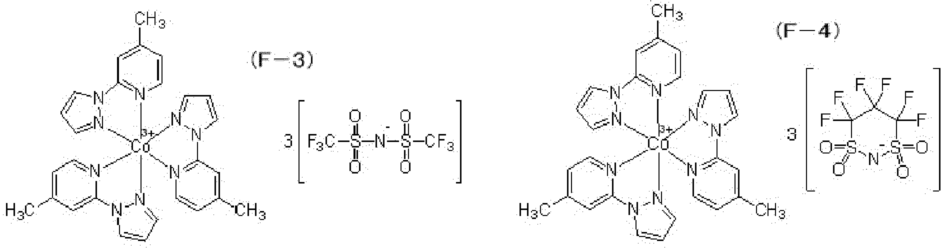

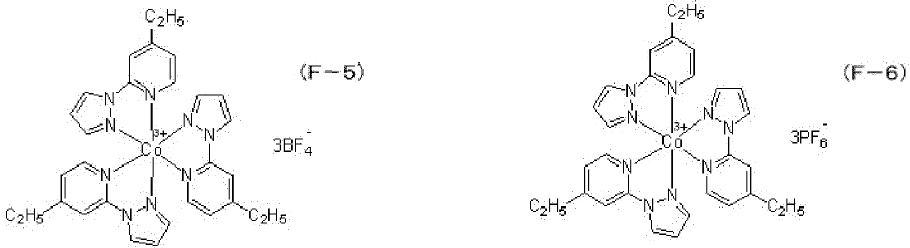

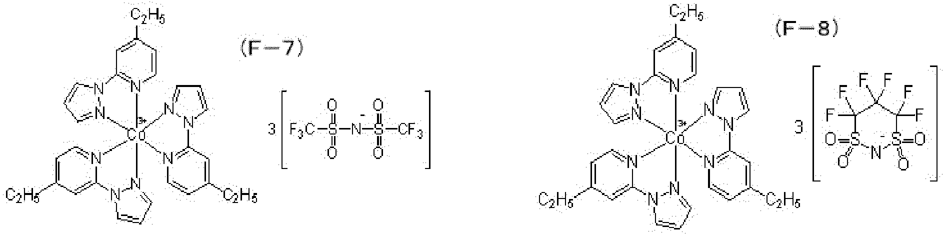

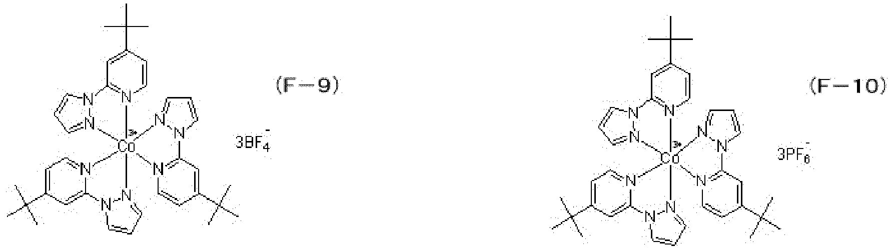

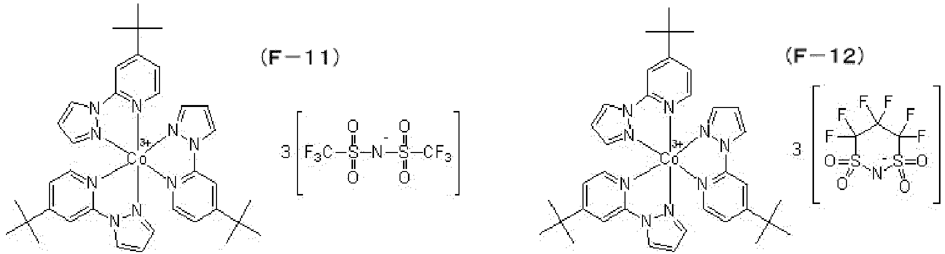

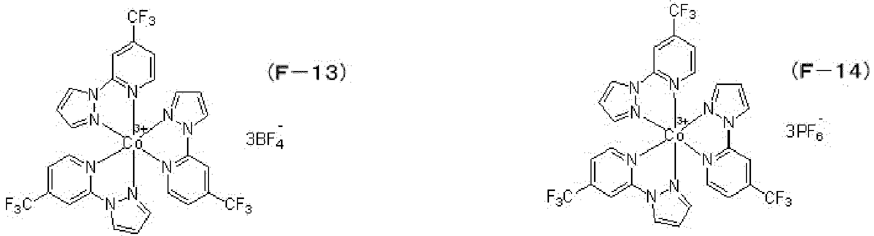

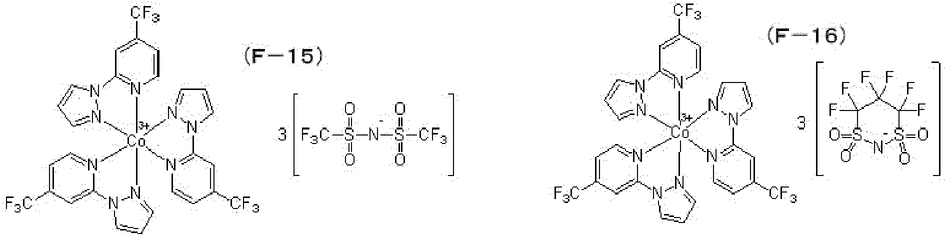

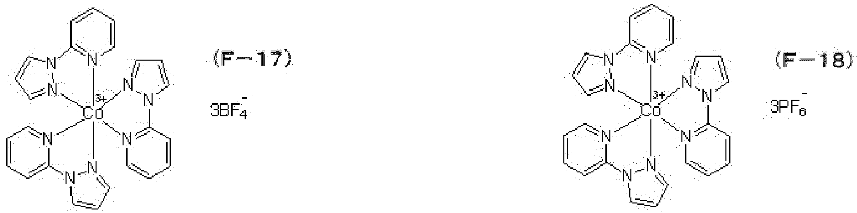

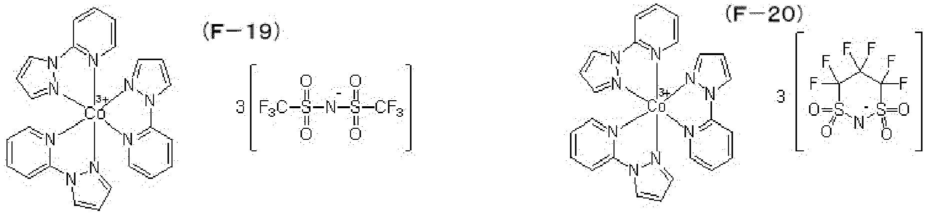

The hole-transporting layer may have a single layer structure formed of a single material, or a multi-layer structure including a few compounds. When the hole-transporting layer has a multi-layer structure, a layer within the hole-transporting layer close to the second electrode preferably includes a polymeric material. Use of the polymeric material having excellent film formability is advantageous because a surface of the porous electron-transporting layer can be made smooth, and photoelectric conversion properties can be improved.

Since the polymeric material does not easily penetrate into the porous electron-transporting layer, moreover, the polymeric material can provide excellent coverage over the surface of the porous electron-transporting layer, which may lead to an effect of preventing short circuit when an electrode is disposed.

Examples of the polymeric material used for the hole-transporting layer include hole-transporting polymeric materials known in the art.

Examples of the hole-transporting polymeric material include polythiophene compounds, polyphenylene vinylene compounds, polyfluorene compounds, polyphenylene compounds, polyarylamine compounds, and polythiadiazole compounds.

Examples of the polythiophene compound include poly(3-n-hexylthiophene), poly(3-n-octyloxythiophene), poly(9,9'-dioctyl-fluorene-co-bithiophene), poly(3,3‴-didodecylquarter thiophene), poly(3,6-dioctylthieno[3,2-b]thiophene), poly(2,5-bis(3-decylthiophen-2-yl)thieno[3,2-b]thiophene), poly(3,4-didecylthiophene-co-thieno[3,2-b]thiophene), poly(3,6-dioctylthieno[3,2-b]thiophene-co-thieno[3,2-b]thiophene), poly(3,6-dioctylthieno[3,2-b]thiophene-co-thiophene), and poly(3,6-dioctylthieno[3,2-b]thiophene-co-bithiophene).

Examples of the polyphenylene vinylene compound include poly[2-methoxy-5-(2-ethylhexyloxy)-1,4-phenylenevinylene], poly[2-methoxy-5-(3,7-dimethyloctyloxy)-1,4-phenylenevinylene], and poly[(2-methoxy- 5-(2-ethylhexyloxy)-1,4-phenylenevinylene)-co-(4,4'-biphenylene-vinylene)] .

Examples of the polyfluorene compound include poly(9,9'-didodecylfluorenyl-2,7-diyl), poly[(9,9-dioctyl-2,7-divinylenefluorene)-alt-co-(9,10-anthracene)], poly[(9,9-dioctyl-2,7-divinylenefluorene)-alt-co-(4,4'-biphenylene)], poly[(9,9-dioctyl-2,7-divinylenefluorene)-alt-co-(2-methoxy-5-(2-ethylhexyloxy)-1,4-phenylene)], and poly[(9,9-dioctyl-2,7-diyl)-co-(1,4-(2,5-dihexyloxy)benzene)].

Examples of the polyphenylene compound include poly[2,5-dioctyloxy-1,4-phenylene] and poly[2,5-di(2-ethylhexyloxy-1,4-phenylene].

Examples of the polyarylamine compound include poly[(9,9-dioctylfluorenyl-2,7-diyl)-alt-co-(N,N'-diphenyl)-N,N'-di(p-hexylphenyl)-1,4-diaminobenzene], poly[(9,9-dioctylfluorenyl-2,7-diyl)-alt-co-(N,N'-bis(4-octyloxyphenyl)benzidine-N,N'-(1,4-diphenylene)], poly[(N,N'-bis(4-octyloxyphenyl)benzidine-N,N'-(1,4-diphenylene)], poly [(N,N'-bis(4-(2-ethylhexyloxy)phenyl)benzidine-N,N'-(1,4- diphenylene)], poly[phenylimino-1,4-phenylenevinylene-2,5-dioctyloxy-1,4-phenylenevinylene-1,4-phenylene], poly[p-tolylimino-1,4-phenylenevinylene-2,5-di(2-ethylhexyloxy)-1,4-phenylenevinylene-1,4-phenylene], and poly[4-(2-ethylhexyloxy)phenylimino-1,4-biphenylene] .

Examples of the polythiadiazole compound include poly[(9,9-dioctylfluorenyl-2,7-diyl)-alt-co-(1,4-benzo(2,1',3)thiadiazole] and poly(3,4-didecylthiophene-co-(1,4-benzo(2,1',3)thiadiazole).

Among the above-listed examples, polythiophene compounds and polyarylamine compounds are preferable considering carrier mobility and ionization potential thereof.

The average thickness of the hole-transporting layer is not particularly limited, and may be appropriately selected depending on the intended purpose. The hole-transporting layer preferably has a structure where the hole-transporting layer is penetrated into the pores of the porous electron-transporting layer. The average thickness of the hole-transporting layer on the electron-transporting layer is preferably 0.01 µm or greater but 20 µm or less, and more preferably 0.1 µm or greater but 10 µm or less, and even more preferably 0.2 µm or greater but 2 µm or less.

The hole-transporting layer can be directly formed on the electron-transporting layer on which the photosensitization compound is adsorbed. A production method of the hole-transporting layer is not particularly limited, and may be appropriately selected depending on the intended purpose. Examples thereof include a method for forming a film in vacuum, such as vacuum vapor deposition, and a wet film formation method. Among the above-listed examples, a wet film formation method is particularly preferable considering the production cost, and a method for coating on the electron-transporting layer is preferable.

When the wet film formation method is used, the coating method is not particularly limited, and coating may be performed according to any of known methods. For example, various methods, such as dip coating, spray coating, wire bar coating, spin coating, roller coating, blade coating, gravure coating, and wet printing methods, such as relief printing, offset printing, gravure printing, intaglio printing, rubber plate printing, and screen printing may be used.

Moreover, the hole-transporting layer may be formed in a super critical fluid or subcritical fluid having lower temperature and pressure than a critical point. The supercritical fluid is not particularly limited and may be appropriately selected depending on the intended purpose, so long as the supercritical fluid exists as a non-condensable highdensity fluid in a temperature and pressure region exceeding the limit (critical point) at which gas and liquid can coexist, does not condense even when compressed, and is a fluid in a state of being equal to or greater than the critical temperature and the critical pressure. The supercritical fluid is preferably a supercritical fluid having a low critical temperature.

Examples of the supercritical fluid include carbon monoxide, carbon dioxide, ammonia, nitrogen, water, alcohol solvents, hydrocarbon solvents, halogen solvents, and ether solvents.

Examples of the alcohol solvent include methanol, ethanol, and n-butanol.

Examples of the hydrocarbon solvent include ethane, propane, 2,3-dimethylbutane, benzene, and toluene.

Examples of the halogen solvent include methylene chloride and chlorotrifluoromethane.

Examples of the ether solvent include dimethyl ether.

The above-listed examples may be used alone or in combination.

Among the above-listed examples, carbon dioxide is preferable because carbon dioxide has a critical pressure of 7.3 MPa and a critical temperature of 31°C, and therefore a supercritical state of carbon dioxide can be easily generated, and the supercritical fluid of carbon dioxide is easily handled due to incombustibility thereof.

The subcritical fluid is not particularly limited and may be appropriately selected depending on the intended purpose so long as it exists as high-pressure liquid in a temperature and pressure region near the critical point. The above-listed compounds for the supercritical fluid can be also suitably used as the subcritical fluid.

A critical temperature and critical pressure of the subcritical fluid are not particularly limited, and may be appropriately selected depending on the intended purpose. The critical temperature thereof is preferably -273°C or higher but 300°C or lower, particularly preferably 0°C or higher but 200°C or lower.

In addition to the supercritical fluid and the subcritical fluid, an organic solvent or an entrainer may be used in combination. The solubility in the supercritical fluid can be easily adjusted by adding the organic solvent or entrainer.

The organic solvent is not particularly limited, and may be appropriately selected depending on the intended purpose. Examples of the organic solvent include a ketone solvent, an ester solvent, an ether solvent, an amide solvent, a halogenated hydrocarbon solvent, and a hydrocarbon solvent.

Examples of the ketone solvent include acetone, methyl ethyl ketone, and methyl isobutyl ketone.

Examples of the ester solvent include ethyl formate, ethyl acetate, and n-butyl acetate.

Examples of the ether solvent include diisopropyl ether, dimethoxy ethane, tetrahydrofuran, dioxolane, and dioxane.

Examples of the amide solvent include N,N-dimethylformamide, N,N-dimethylacetamide, and N-methyl-2-pyrrolidone.

Examples of the halogenated hydrocarbon solvent include dichloromethane, chloroform, bromoform, methyl iodide, dichloroethane, trichloroethane, trichloroethylene, chlorobenzene, o-dichlorobenzene, fluorobenzene, bromobenzene, iodobenzene, and 1-chloronaphthalene.

Examples of the hydrocarbon solvent include n-pentane, n-hexane, n-octane, 1,5-hexadiene, cyclohexane, methylcyclohexane, cyclohexadiene, benzene, toluene, o-xylene, m-xylene, p-xylene, ethylbenzene, and cumene.

The above-listed examples may be used alone or in combination.

After depositing the hole-transporting material on the electron-transporting layer on which the photosensitization compound is adsorbed, moreover, a press treatment may be performed. Since the hole-transporting material is more closely adhered to the electron-transporting layer serving as a porous electrode by performed the press treatment, efficiency may be improved.

A method of the press treatment is not particularly limited, and may be appropriately selected depending on the intended purpose. Examples thereof include a press molding method using a plate such as an IR tablet molding device, and a roll press method using a roller.

The pressure is preferably 10 kgf/cm² or greater, and more preferably 30 kgf/cm² or greater.

The duration for the press treatment is not particularly limited, and may be appropriately selected depending on the intended purpose. The duration is preferably 1 hour or shorter. Moreover, heat may be applied during the press treatment. At the time of the press treatment, a release agent may be provided between a press machine and the electrode.

Examples of the release agent include fluororesins, such as polyethylene tetrafluoride, polychloroethylene trifluoride, ethylene tetrafluoride-propylene hexafluoride copolymers, perfluoroalkoxy fluoride resins, polyvinylidene fluoride, ethylene-ethylene tetrafluoride copolymers, ethylene-chloroethylene trifluoride copolymers, and polyvinyl fluoride. The above-listed examples may be used alone or in combination.

After performing the press treatment, metal oxide may be provided between the hole-transporting material and the second electrode before disposing the second electrode.

Examples of the metal oxide include molybdenum oxide, tungsten oxide, vanadium oxide, and nickel oxide. The above-listed examples may be used alone or in combination. Among the above-listed examples, molybdenum oxide is preferable.

A method for providing the metal oxide on the hole-transporting layer is not particularly limited, and may be appropriately selected depending on the intended purpose. Examples thereof include a method where a film is formed in vacuum, such as sputtering, and vacuum vapor deposition, and a wet film formation method.

As the wet film formation method, preferred is a method where a paste in which a powder or sol of the metal oxide is dispersed is prepared, and the paste is applied onto the hole-transporting layer. When a wet film formation method is used, the coating method is not particularly limited, and the coating method may be performed according to any of known methods. For example, various methods, such as dip coating, spray coating, wire bar coating, spin coating, roller coating, blade coating, gravure coating, and a wet printing method (e.g., relief printing, offset printing, gravure printing, intaglio printing, rubber plate printing, and screen printing) may be used.

The average thickness of the applied metal oxide is preferably 0.1 nm or greater but 50 nm or less, and more preferably 1 nm or greater but 10 nm or less.

### <Second electrode (fourth electrode)>

The second electrode (the second electrode may be the fourth electrode hereinafter) includes a charge-collecting layer including conductive nanowires, and a conductive polymer or carbon nanotubes covering at least part of the conductive nanowires. The charge-collecting layer is disposed on the hole-transporting layer. It is preferred that 50% or greater of the entire conductive nanowires be covered with the conductive polymer. The entire conductive nanowires may be covered with the conductive polymer.

At least part of the conductive nanowires is preferably embedded in the conductive polymer. More preferably, 50% or greater of the entire conductive nanowires is embedded in the conductive polymer. All of the conductive nanowires may be entirely embedded in the conductive polymer.

The charge-collecting layer is formed by forming a conductive nanowire layer including conductive nanowires on the hole-transporting layer, followed by applying a conductive polymer to cover at least part of the conductive nanowires and to be disposed on the hole-transporting layer. Alternatively, the charge-collecting layer may be covered with carbon nanotubes.

### -Conductive nanowire-

A conductive nanowire is a wire metal structure, which has a cross-section diameter of less than 1 µm, which is the cross-section diameter of nano-scale, and an aspect ratio (major axis length/diameter) of 10 or greater.

The diameter of the conductive nanowire is preferably 5 nm or greater but 250 nm or less, and more preferably 10 nm or greater but 150 nm or less. When the diameter of the conductive nanowire is within the above-mentioned range, a film of the conductive nanowires has excellent transparency.

The major axis length of the conductive nanowire is preferably 0.5 µm or greater but 500 µm or less, and more preferably 2.5 µm or greater but 100 µm or less. When the major axis thereof is within the above-mentioned range, excellent dispersibility of the conductive nanowires is obtained, and excellent conductivity and transparency are obtained when the conductive nanowires are formed as a transparent conductive film.

Examples of the conductive nanowires include organic fibers or inorganic fibers coated with a metal, conductive metal oxide fibers, metal nanowires, carbon fibers, and carbon nanotubes. Among the above-listed examples, metal nanowires are preferable because satisfactory conductivity can be obtained.

A metal composition of the metal nanowires is not particularly limited, and may be appropriately selected depending on the intended purpose. For example, the metal composition of the metal nanowires can be formed of one or two or more metals, such as noble metal elements, and base metal elements. The metal composition preferably include at least one metal selected from the group consisting of noble metal (e.g., gold, platinum, silver, palladium, rhodium, iridium, ruthenium, and osmium), iron, cobalt, copper, and tin. The metal composition particularly preferably includes silver considering conductivity thereof.

Therefore, the conductive nanowires are particularly preferably silver nanowires.

The silver nanowires as the conductive nanowires are not particularly limited and silver nanowires produced by any of production methods known in the art may be used. In the present disclosure, preferably are silver nanowires obtained by a production method including a step of allowing a silver compound to react in polyol at a temperature ranging from 25°C to 180°C using, as a wire growth controlling agent, an N-substituted acrylamide-containing polymer.

A silver nanowire layer is formed by applying a silver nanowire dispersion liquid onto the hole-transporting layer.

The silver nanowire dispersion liquid includes silver nanowires, a dispersion medium, and other components.

Examples of the dispersion medium include water and alcohols. Examples of the alcohols include methanol, ethanol, 1-propanol, 2-propanol, 1-butanol, 2-butanol, 2-methylpropanol, 1,1-dimethylethanol, and cyclohexanol. The above-listed examples may be used alone or in combination.

If necessary, the silver nanowire dispersion liquid can include, as the above-mentioned other components, various additives such as a surfactant, a polymerizable compound, an antioxidant, a sulfurization preventing agent, an anti-corrosion agent, a viscosity modifier, and a preservative.

The silver nanowire layer can be performed by a known coating method using the silver nanowire dispersion liquid. Examples of the coating method include spin coating, slit coating, dip coating, blade coating, bar coating, spraying, relief printing, intaglio printing, screen printing, lithographic printing, dispensing, and inkjet coating.

### -Conductive polymer-

The conductive polymer is not particularly limited, and may be appropriately selected depending on the intended purpose. Examples of the conductive polymer include polythiophene or derivatives thereof, polyaniline or derivatives thereof, polypyrrole or derivatives thereof, polyacetylene or derivatives thereof, polycarbazole or derivatives thereof, polyvinylpyridine or derivatives thereof, poly(n-vinylcarbazole) or derivatives thereof, polyfluorene or derivatives thereof, polyphenylene or derivatives thereof, poly(p-phenylenevinylene) or derivatives thereof, poly(pyridine vinylene) or derivatives thereof, polyquinoxaline or derivatives thereof, polyquinoline or derivatives thereof, polyoxadiazole derivatives, polybathophenanthroline derivatives, polytriazole derivatives, and compounds obtained by appropriately substituting the-above listed polymers with a substituent such as an amine group, a hydroxy group, a nitrile group, or a carbonyl group. The above-listed examples may be used alone or in combination. Among the above-listed examples, polythiophene or a derivative thereof, polyaniline or a derivative thereof, and polypyrrole or a derivative thereof are preferable because of high conductivity thereof.

The charge-collecting layer can be formed by applying the conductive polymer dispersion liquid prepared by a known method onto the silver nanowire layer by a known coating method. Examples of the coating method include spin coating, slit coating, dip coating, blade coating, bar coating, spraying, relief printing, intaglio printing, screen printing, lithographic printing, dispensing, and inkjet printing.

The average thickness of the charge-collecting layer is not particularly limited and may be appropriately selected depending on the intended purpose. The average thickness of the charge-collecting layer is preferably 0.02 µm or greater but 0.2 µm or less, and more preferably 0.05 µm or greater but 0.1 µm or less.

The conductive polymer is not limited as long as the conductive polymer can cover the silver nanowires to fill the gaps between adjacent silver nanowires in the charge-collecting layer. An amount of the conductive polymer is preferably smaller than an amount of the silver nanowires considering high conductivity.

Therefore, a mass ratio (A:B) of the amount A of the silver nanowire in the charge-collecting layer to the amount B of the conductive polymer in the charge-collecting layer is preferably from 1:1 through 1:4.

The second electrode preferably has translucency. Having translucency means that the optical transmittance of the second electrode is 80% or greater. The optical transmittance can be measured by means of a general ultraviolet and visible spectrophotometer.

### <Sealing member>

The sealing member may be surface sealing with a pressure sensitive adhesive (PSA), or frame sealing with a sealing resin. Examples of the PSA include adhesive films formed of an acryl resin, an epoxy resin, or an olefin resin in which an absorbent for absorbing moisture etc. is kneaded. Examples of the sealing resin include an acryl resin, an epoxy resin, and a low-melting point glass resin.

As a cured product of the acrylic resin, any of materials known in the art can be used, so long as the cured product is a product obtained by curing a monomer or an oligomer including an acrylic group in a molecule thereof.

As a cured product of the epoxy resin, any of materials known in the art can be used, so long as the cured product is a product obtained by curing a monomer or an oligomer including an epoxy group in a molecule thereof.

Examples of the epoxy resin include water-dispersing epoxy resins, non-solvent epoxy resins, solid epoxy resins, heat-curable epoxy resins, curing agent-mixed epoxy resins, and UV-curable epoxy resins. Among the above-listed examples, a heat-curable epoxy resin and a UV-curable epoxy resin are preferable, and a UV-curable epoxy resin is more preferable. Even when a UV-curable epoxy resin is used, heating may be performed, and heating is preferably performed even after curing the epoxy resin with UV irradiation.

Examples of the epoxy resin include A-based epoxy resins, bisphenol F-based epoxy resins, novolac-based epoxy resins, alicyclic epoxy resins, long-chain aliphatic epoxy resins, glycidyl amine-based epoxy resins, glycidyl ether-based epoxy resins, and glycidyl ester-based epoxy resins. The above-listed examples may be used alone or in combination.

A curing agent and various additives may be preferably blended in the epoxy resin, according to the necessity.

The curing agent is roughly classified into an amine-based curing agent, an acid anhydride-based curing agent, a polyamide-based curing agent, and other curing agents, and the curing agent is appropriately selected depending on the intended purpose.

Examples of the amine-based curing agent include: aliphatic polyamines such as diethylenetriamine and triethylenetetramine; and aromatic polyamines such as methphenylenediamine, diaminodiphenylmethane, and diaminodiphenylsulfone.

Examples of the acid anhydride-based curing agent include phthalic anhydride, tetrahydrophthalic anhydride, hexahydrophthalic anhydride, methyltetrahydrophthalic anhydride, methylnadic anhydride, pyromellitic anhydride, HET anhydride, and dodecenylsuccinic anhydride.

Examples of other curing agents include imidazoles and polymercaptan. The above-listed examples may be used alone or in combination.

Examples of the additive include filler, gap agents, polymerization initiators, drying agents (moisture absorbents), curing accelerators, coupling agents, flexibilizers, colorants, flame retardant auxiliaries, antioxidants, and organic solvents. Among the above-listed examples, filler, a gap agent, a curing accelerator, a polymerization initiator, and a drying agent (moisture absorbent) are preferable, and filler and a polymerization initiator are more preferable.

The filler is effective in preventing entry of moisture and oxygen, as well as exhibiting effects of reducing volumetric shrinkage during curing, reducing an amount of outgas during curing or heating, improving mechanical strength, controlling thermal conductivity or fluidity, and is very effective in maintaining stable output in various environments. Particularly, output characteristics of durability of the photoelectric conversion element are influenced not only by moisture or oxygen entered but also by outgas generated during curing or heating of the sealing member. The outgas generated during heating significantly affects output characteristics when the photoelectric conversion element is stored in a high temperature environment.

In this case, the filler, the gap agent, or the drying agent are added to the sealing member. As a result, entry of moisture or oxygen can be suppressed by such additives themselves, and an amount of the sealing member to be used can be reduced, and therefore generation of outgas can be reduced. Addition of such additives can be also effective not only for curing, but also when photoelectric conversion element is stored in a high temperature environment.

The filler is not particularly limited and any of filler known in the art can be used. For example, inorganic filler, such as crystalline or amorphous silica, talc, alumina, aluminum nitride, silicon nitride, calcium silicate, and calcium carbonate, is preferably used. The above-listed examples may be used alone or in combination. The average primary particle diameter of the filler is preferably 0.1 µm or greater but 10 µm or less, and more preferably 1 µm or greater but 5 µm or less. When the average primary particle diameter is within the preferable range, entry of moisture or oxygen can be sufficiently suppressed, appropriate viscosity of the sealing member can be obtained, adhesion to a substrate and defoamability can be improved, a width of sealing can be controlled, and desirable processability is obtained.

An amount of the filler is preferably 10 parts by mass or greater but 90 parts by mass or less, and more preferably 20 parts by mass or greater but 70 parts by mass or less, relative to 100 parts by mass of the entire sealing member. When the amount of the filler is within the above-mentioned range, entry of moisture or oxygen can be sufficiently suppressed, appropriate viscosity of the sealing member can be obtained, and desirable adhesion and processability are obtained.

The gas agent is also called a gap controlling agent or a spacer agent, and can control a gap of the sealing area. When the sealing member is applied onto the first substrate or the first electrode, the second substrate is placed thereon, and the stacked structure is sealed, a gap of the sealing area matches with the size of the gap agent as the epoxy resin includes the gap agent. As a result, it is possible to easily control the gap of the sealing area.

Any of materials known in the art can be used as the gap agent, as long as the material is particles having a uniform particle diameter and has high solvent resistance or heat resistance. The material of the gap agent is preferably a material having high affinity to an epoxy resin and being spherical particles. Specific examples thereof include glass beads, silica particles, and organic resin particles. The above-listed examples may be used alone or in combination.

The particle diameter of the gap agent can be selected depending on the gap of the sealing area to be set. The particle diameter thereof is preferably 1 µm or more but 100 µm or less, more preferably 5 µm or more but 50 µm or less.

The polymerization initiator is a material that is added for the purpose of initiating polymerization using heat or light.

The thermal polymerization initiator is a compound that generates active species such as radical cations through heating. Specific examples thereof include azo compounds such as 2,2'-azobisbutyronitrile (AIBN) and peroxides such as benzoyl peroxide (BPO). Examples of the cationic thermal polymerization initiator include benzenesulfonic acid esters and alkyl sulfonium salts. Meanwhile, as the photopolymerization initiator, a cationic polymerization initiator is preferably used in the case of the epoxy resin. When a cationic photopolymerization initiator is blended in the epoxy resin and light irradiation is performed, the cationic photopolymerization initiator is decomposed to generate strong acid, the acid induces polymerization of the epoxy resin to proceed with a curing reaction. The cationic photopolymerization initiator has advantages that that volumetric shrinkage during curing is low, oxygen inhibition does not occur, and storage stability is high.

Examples of the cationic photopolymerization initiator include aromatic diazonium salts, aromatic iodonium salts, aromatic sulfonium salts, metallocene compounds, and silanol-aluminum complexes.

Moreover, a photoacid generator capable of generating acid upon irradiation of light may be used. The photoacid generator functions as acid that initiates a cationic polymerization. Examples thereof include onium salts such as ionic sulfonium salt-based onium salts and ionic iodonium salt-based onium salts including a cation part and an ionic part. The above-listed examples may be used alone or in combination.

An amount of the polymerization initiator may vary depending on materials for use. The amount of the polymerization initiator is preferably 0.5 parts by mass or greater but 10 parts by mass or less, and more preferably 1 part by mass or greater but 5 parts by mass or less, relative to 100 parts by mass of the entire sealing member. When the amount of the polymerization initiator is within the above-mentioned range, curing is progressed appropriately, an amount of uncured residues can be reduced, and excessive generation of outgas can be prevented, which is effective.

The drying agent is also called a moisture absorbent and is a material having a function of physically or chemically adsorbing or absorbing moisture. Inclusion of the drying agent in the sealing member is effective because moisture resistance may be further improved and influence of the outgas can be decreased in some cases.

The drying agent is preferably particulate. Examples thereof include inorganic water-absorbing materials such as calcium oxide, barium oxide, magnesium oxide, magnesium sulfate, sodium sulfate, calcium chloride, silica gel, molecular sieve, and zeolite. Among the above-listed examples, zeolite is preferable because zeolite absorbs a large amount of moisture. The above-listed examples may be used alone or in combination.

The curing accelerator is also called a curing catalyst and is used for the purpose of accelerating a curing speed. The curing accelerator is mainly used for a heat-curable epoxy resin.

Examples of the curing accelerator include: tertiary amine or tertiary amine salts such as DBU (1,8-diazabicyclo(5,4,0)-undecene-7) and DBN (1,5-diazabicyclo(4,3,0)-nonene-5); imidazole-based compounds such as 1-cyanoethyl-2-ethyl-4-methylimidazole and 2-ethyl-4-methylimidazole; and phosphine or phosphonium salts such as triphenylphosphine and tetraphenylphosphonium-tetraphenyl borate. The above-listed examples may be used alone or in combination.

The coupling agent has an effect of enhancing a bonding force between molecules, and examples thereof include silane coupling agents. Specific examples thereof include: silane coupling agents such as 3-glycidoxypropyltrimethoxysilane, 3-glycidoxypropylmethyldimethoxysilane, 3-glycidoxypropylmethyldimethoxysilane, 2-(3,4-epoxycyclohexyl)ethyltrimethoxysilane, N-phenyl-γ-aminopropyltrimethoxysilane, N-(2-aminoethyl)3-aminopropylmethyldimethoxysilane, N-(2-aminoethyl)3-aminopropylmethyltrimethoxysilane, 3-aminopropyltriethoxysilane, 3-mercaptopropyltrimethoxysilane, vinyltrimethoxysilane, N-(2-(vinylbenzylamino)ethyl)3-aminopropyltrimethoxysilane hydrochloride, and 3-methacryloxypropyltrimethoxysilane. The above-listed examples may be used alone or in combination.

After applying the low-melting point glass resin, the resin is fired at about 550°C to decompose the resin component, and the resin is melted with infrared laser etc., to adhere to the glass substrate. At this time, the glass component having a low melting temperature is diffused inside the metal oxide layer and is physically joined, to thereby obtain high sealing performance Since the resin component disappears, moreover, outgas as seen with an acryl resin or an epoxy resin is not generated, and therefore deterioration of the photoelectric conversion element is prevented.

As the sealing member, resin compositions that are commercially available as sealing materials, seal materials, or adhesives have been known, and can be effectively used in the present disclosure. Among the above-listed examples, there are epoxy resin compositions that are developed and are commercially available to be used in solar battery cells or organic EL elements, and can be particularly effectively used in the present disclosure. Examples of the commercially available products of the epoxy resin include product names: TB3118, TB3114, TB3124, and TB3125F (all of which are available from ThreeBond), World Rock 5910, World Rock 5920, and World Rock 8723 (all of which are available from Kyoritsu Chemical & Co., Ltd.), and WB90US(P) (available from MORESCO).

In the present disclosure, a sheet-form sealing material (pressure sensitive adhesive: PSA) may be used. Examples thereof include Barrier Tape 61501 (available from Tesa Tape K.K.), and S-2191 (available from MORESCO).

A formation method of the sealing member is not particularly limited, and the sealing member can be formed by a known method. For example, various methods, such as dispensing, wire bar coating, spin coating, roller coating, blade coating, gravure coating, relief printing, offset, intaglio printing, rubber plate printing, and screen printing, may be used.

Moreover, a buffer layer may be disposed between the sealing member and the second electrode. The buffer layer is not particularly limited as long as the buffer layer is disposed not to be in contact with the second electrode, and may be appropriately selected depending on the intended purpose. As the buffer layer, aluminium oxide, silicon nitride, silicon oxide, silicon dioxide, a silicone resin, or a fluororesin is preferably used.

The photoelectric conversion element of the present disclosure will be described with reference to drawings hereinafter. In the drawings, the identical numerical reference is given to the identical constitutional component, and the duplicated description for the same component may be omitted.

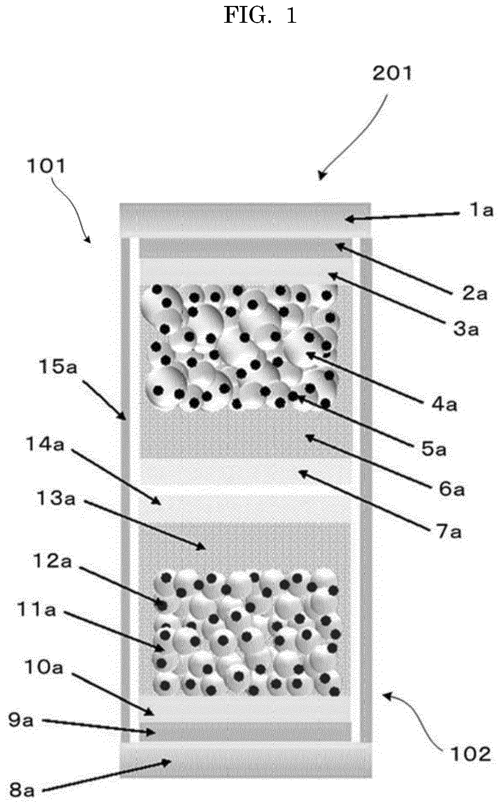

FIG. 1 is a schematic view illustrating an example of the photoelectric conversion element of the present disclosure. In the first photoelectric conversion section 101 of the photoelectric conversion element 201 illustrated in FIG. 1, the first electrode 2a is formed on the first substratela. The first hole-blocking layer 3a is formed on the first electrode 2a. Therefore, recombination of electrons and holes can be prevented, which is effective for improving power generation performance. The first electron-transporting layer 4a is formed on the first hole-blocking layer 3a, and the first photosensitization compound 5a is adsorbed on the surface of the electron-transporting material constituting the first electron-transporting layer 4a. At the upper and inner parts of the first electron-transporting layer 4a, the first hole-transporting layer 6a is formed, and the second electrode 7a is formed on the first hole-transporting layer 6a.

In the second photoelectric conversion section 102, the third electrode 9a is formed on the second substrate 8a. The second hole-blocking layer 10a is formed on the third electrode 9a. Therefore, recombination of electrons and holes can be prevented, which is effective for improving power generation performance. The second electron-transporting layer 11a is formed on the second hole-blocking layer 10a, and the second photosensitization compound 12a is adsorbed on the surface of the electron-transporting material constituting the second electron-transporting layer 11a. At the upper and inner parts of the second electron-transporting layer 11a, the second hole-transporting layer 13a is formed, and the fourth electrode 14a is formed on the second hole-transporting layer 13a.

The first photoelectric conversion section 101 and the second photoelectric conversion section 102 are disposed to face each other, and are fixed between the first substrate 1a or the first hole-blocking layer 3a, and the second substrate 8a or the second hole-blocking layer 10a with the sealing member 15a.

Since a hollow section is provided between the first photoelectric conversion section 101 and the second photoelectric conversion section 102, the moisture content or oxygen concentration of the hollow section can be controlled, and power generation performance or durability can be improved. The oxygen concentration inside the hollow section is not particularly limited and may be selected freely. The oxygen concentration is preferably 0% or greater but 21% or less, and more preferably 5% or greater but 15% or less.

Although it is not illustrated, each of the first electrode 2a and the second electrode 7a has a path allowing electric current to pass to each electrode extraction terminal.

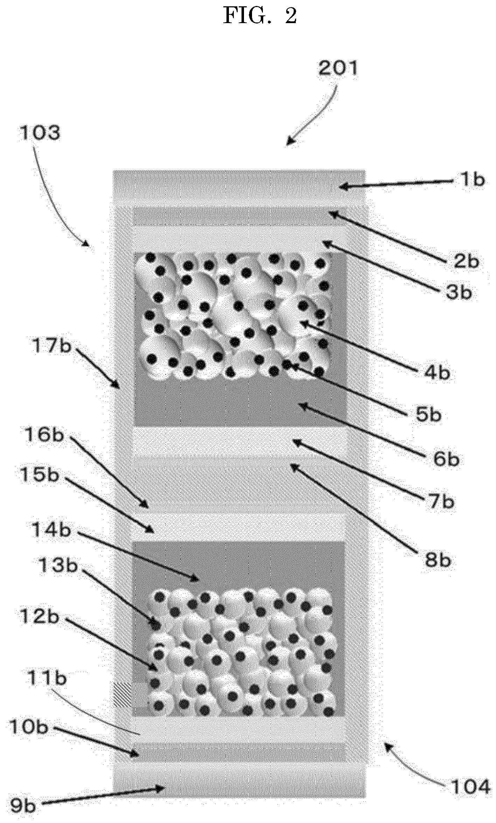

FIG. 2 is a schematic view illustrating another example of the photoelectric conversion element of the present disclosure. In the photoelectric conversion element 202 of FIG. 2, the first buffer layer 8b is formed on the second electrode 7b, and similarly, the second buffer layer 16b is formed on the fourth electrode 15b. The first photoelectric conversion section 103 and the second photoelectric conversion section 104 are disposed to face each other, and are fixed between the first substrate 1b or the first hole-blocking layer 3b or the first buffer layer 8b and the second substrate 9b or the second hole-blocking layer 11b or the second buffer layer 16b with the sealing member 17b.

Since the first photoelectric conversion section 103 and the second photoelectric conversion section 104 are sealed with the sealing member 17b, external entry of oxygen or water can be prevented, and high temperature and high humidity resistance of the photoelectric conversion element can be improved.

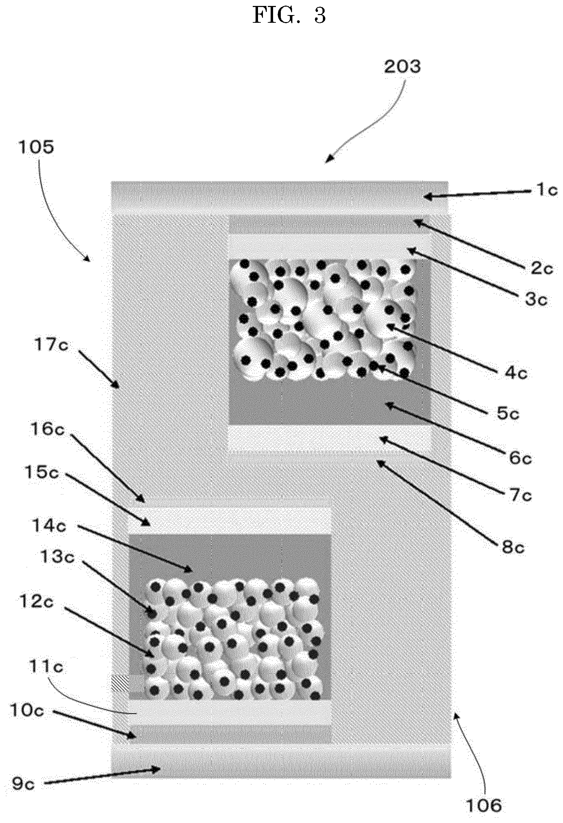

FIG. 3 is a schematic view illustrating yet another example of the photoelectric conversion element of the present disclosure. In the photoelectric conversion element 203 of FIG. 3, the first photoelectric conversion section 105 and the second photoelectric conversion section 106 are disposed to partially face each other. A color tone varies depending on a type of the photosensitization compound for use. Since the region where the electron-transporting layers on each of which the photosensitization compound is adsorbed, and the region where the electron-transporting layers are not overlapped emit different colors. Therefore, at maximum, three colors can be emitted. High designability can be obtained with three colors.

The first electrode 2c and the second electrode 7c, or the first electron-transporting layer 4c and the second electron-transporting layer 12c, or the first hole-transporting layer 6c and the second hole-transporting layer 14c, or the third electrode 10c and the fourth electrode 15c in the first photoelectric conversion section 105 and the second photoelectric conversion section may be formed of mutually different materials. For example, materials for the first photoelectric conversion section 105 and the second photoelectric conversion section 106 may be selected to give a difference in translucency between the first photoelectric conversion section 105 and the second photoelectric conversion section 106. As a result, brightness of each color can be adjusted.

### (Electronic device)

The electronic device of the present disclosure includes the photoelectric conversion element of the present disclosure and a device driven by electric power generated through photoelectric conversion of the photoelectric conversion element. The electronic device may further include other devices according to the necessity.

### (Power supply module)

The power supply module of the present disclosure includes the photoelectric conversion element of the present disclosure, and a power supply integrated circuit (IC). The power supply module may further include other devices according to the necessity.

Next, a specific embodiment of the electronic device including the photoelectric conversion element of the present disclosure and a device driven by the power generated by the photoelectric conversion element will be described.

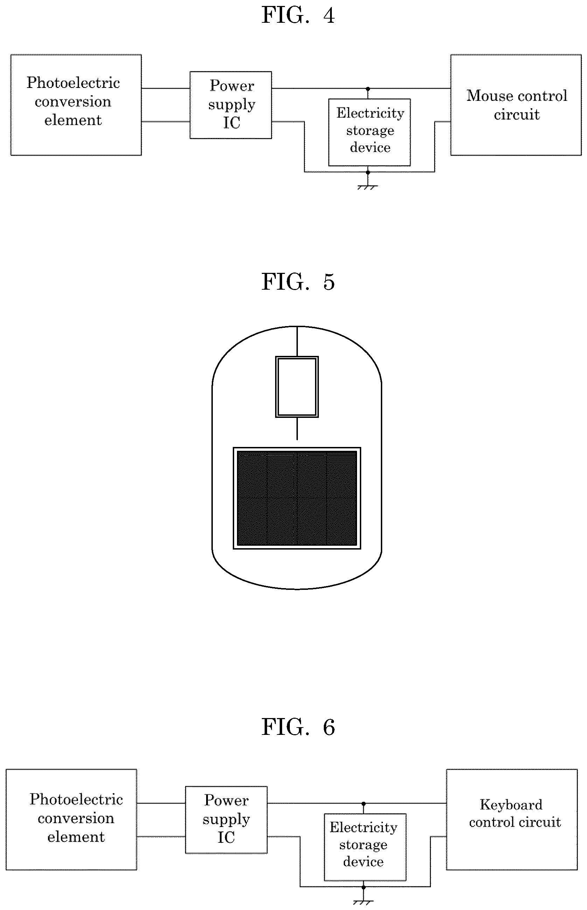

FIG. 4 is a block diagram illustrating a mouse of a personal computer as an example of the electronic device of the present disclosure.

As illustrated in FIG. 4, the photoelectric conversion element is combined with the power supply integrated circuit, and the electricity storage device, and the electric power supplied is connected to the power source of the control circuit of the mouse. As a result, the electricity storage device can be charged when the mouse is not used, and the charged electricity can be used to drive the mouse, and therefore the mouse that does not use wiring or replacement of a battery can be obtained. Moreover, the weight of the mouse can be reduced as it is not necessary to mount a battery. Therefore, the mouse as the electronic device of the present disclosure is effective.

FIG. 5 is a schematic external view illustrating an example of the mouse of FIG. 4.

As illustrated in FIG. 5, the photoelectric conversion element, the power supply integrated circuit, and the electricity storage device are mounted inside the mouse, but the upper part of the photoelectric conversion element is covered with a transparent casing to allow light to reach the photoelectric conversion element. Moreover, the entire casing of the mouse may be formed of a transparent resin. The arrangement of the photoelectric conversion element is not limited to the arrangement illustrated in FIG. 5. For example, the photoelectric conversion element may be arranged in a position where the photoelectric conversion element can be irradiated with light even when the mouse is covered with a hand, and such an arrangement may be preferable in some case.

Next, another embodiment of the electronic device including the photoelectric conversion element of the present disclosure and a device driven by the electric power generated by the photoelectric conversion element will be described.

FIG. 6 is a block diagram illustrating a keyboard for a personal computer as an example of the electronic device of the present disclosure.

As illustrated in FIG. 6, the photoelectric conversion element is combined with the power supply integrated circuit and the electricity storage device, and the supplied electricity can be transmitted to a power source of the control circuit of the keyboard. As a result, the electricity storage device can be charged when the keyboard is not used, and the charged electricity can be used to drive the keyboard, and therefore the keyboard that does not use wiring or replacement of a battery can be obtained. Moreover, the weight of the keyboard can be reduced as it is not necessary to mount a battery. Therefore, the keyboard as the electronic device of the present disclosure is effective.

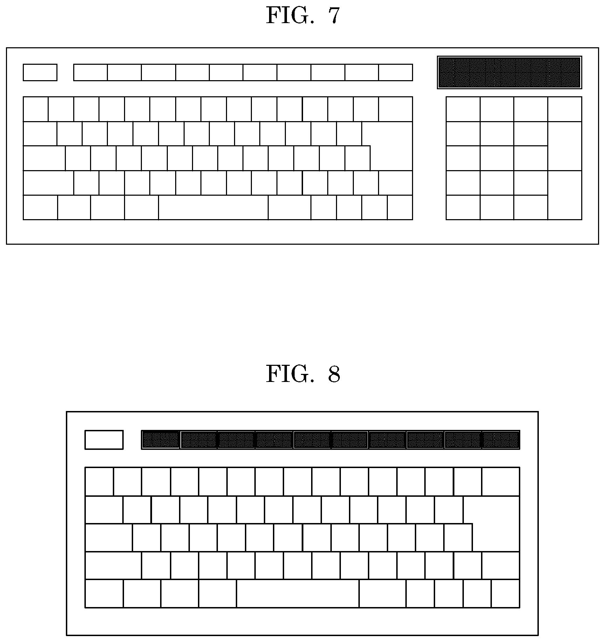

FIG. 7 is a schematic external view illustrating an example of the keyboard illustrated in FIG. 6.

As illustrated in FIG. 7, the photoelectric conversion element, the power supply integrated circuit, and the electricity storage device are mounted inside the keyboard, but the upper part of the photoelectric conversion element is covered with a transparent casing to allow light to reach the photoelectric conversion element. Moreover, the entire casing of the keyboard may be formed of a transparent resin. The arrangement of the photoelectric conversion element is not limited to the arrangement illustrated in FIG. 7. In case of a small keyboard having a small space in which the photoelectric conversion element is mounted, as illustrated in FIG. 8, the photoelectric conversion element may be embedded as part of keys, and such an arrangement is effective.

Next, an embodiment of another electronic device including the photoelectric conversion element and a device driven by the electric power generated by the photoelectric conversion element will be described.

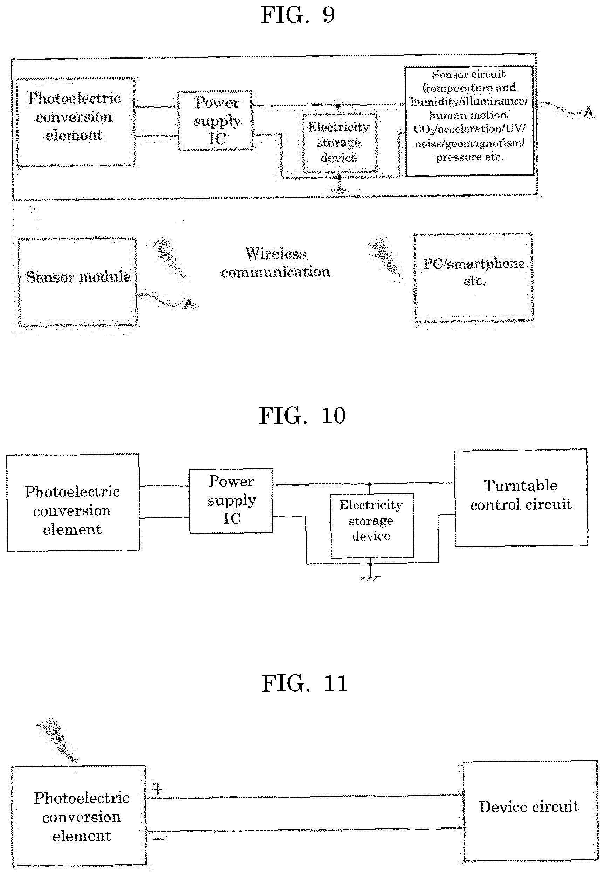

FIG. 9 is a block diagram illustrating a sensor as an example of the electronic device of the present disclosure.

As illustrated in FIG. 9, the photoelectric conversion element is combined with the power supply integrated circuit and the electricity storage device, and the supplied electricity is transmitted to the power source of the sensor circuit. As a result, the sensor module can be composed without connecting to an external power source and without performing replacement of a battery. The sensing target may be a temperature and humidity, illuminance, motions of humans, CO₂, acceleration, UV, noise, geomagnetism, or pressure. The sensor module can be applied for various sensors and is effective. As illustrated in FIG. 9, the sensor module is configured to sense a target to be measured on a regular basis and to transmit the read data to a personal computer (PC) or a smartphone through wireless communication.

It is expected that use of sensors is significantly increased as the internet of things (IoT) society approaches. To replace batteries of numerous sensors one by one is time consuming and is not realistic. Moreover, the fact that a sensor is installed at a position such as a ceiling and a wall where a cell is not easily replaced also makes workability bad. Moreover, supplying electric power by the photoelectric conversion element is also a significantly large advantage. Furthermore, the photoelectric conversion element of the present disclosure has advantages that high output can be obtained with light of low illuminance, a high degree of freedom in installation can be achieved because the output has low dependency on the light incident angle.

Next, another embodiment of the electronic device including the photoelectric conversion element and a device driven by the electric power generated by the photoelectric conversion element will be described.

FIG. 10 is a block diagram illustrating a turntable as an example of the electronic device of the present disclosure.

As illustrated in FIG. 10, the photoelectric conversion element is combined with the power supply integrated circuit and the electricity storage device, and the supplied electricity is transmitted to the power source of the turntable circuit. As a result, the turntable can be composed without connecting to an external power source and without performing replacement of a battery.

The turntable is used, for example, in a display case in which products are displayed. Wiring of a power supply degrades appearance of the display, and moreover displayed products need to be removed at the time of replacing a battery cell, which is time-consuming. Use of the photoelectric conversion element of the present disclosure is effective because the above-mentioned problems can be solved.

### <Use>

The photoelectric conversion element of the present disclosure can function as a self-sustaining power supply, and a device can be driven by the electric power generated by the photoelectric conversion. The photoelectric conversion element of the present disclosure can generate power upon irradiation of light. Therefore, the electronic device does not need to connect with a power source, or perform battery replacement. Therefore, the electronic device can be driven in a place where there is no power supply facility, the electronic device can be worn or carried, and the electronic device can be driven without replacement of a battery cell even in a place where a battery cell is not easily replaced. Moreover, when a dry battery cell is used, the electronic device becomes heavy by a weight of the dry battery cell, or the electronic device becomes large by a size of the dry battery cell. Therefore, there may be a problem in installing the electronic device on a wall or ceiling, or transporting the electronic device. Since the photoelectric conversion module of the present disclosure is light and thin, it can be freely installed, and can be worn and carried, which is advantageous.

As described above, the photoelectric conversion element of the present disclosure can be used as a self-sustaining power supply, and can be used in combination with various electronic devices. For example, the photoelectric conversion element of the present disclosure can be used in combination with a display device (e.g., an electronic desk calculator, a watch, a mobile phone, an electronic organizer, and electronic paper), an accessory device of a personal computer (e.g., a mouse and a keyboard), various sensor devices (e.g., a temperature and humidity sensor and a human detection sensor), transmitters (e.g., a beacon and a global positioning system (GPS)), and numerous electronic devices (e.g., an auxiliary lamp and a remote controller).

The photoelectric conversion element of the present disclosure is widely applied because the photoelectric conversion element can generate electricity particularly with light of low illuminance and can generate electricity indoors and in dimmed or shaded places. Moreover, the photoelectric conversion element is highly safe because liquid leakage found in the case of a dry battery cell does not occur, and accidental ingestion found in the case of a button battery cell does not occur. Furthermore, the photoelectric conversion element can be used as an auxiliary power supply for the purpose of prolonging a continuous operation time of a charge-type or dry cell-type electronic equipment. By using the photoelectric conversion element of the present disclosure and a device driven by the electric power generated by the photoelectric conversion in combination, as described above, an electronic device that is light in weight and easy to use, has a high degree of freedom in installation, does not require replacement of a battery cell, is highly safe, and is effective in decreasing environmental loads can be obtained.

FIG. 11 illustrates a basic structural view of the electronic device in which the photoelectric conversion element of the present disclosure and the device driven by the electric power generated by the photoelectric conversion. The electronic device can generate electricity when the photoelectric conversion element is irradiated with light, and can extract electric power. A circuit of the device can be driven by the generated electric power.

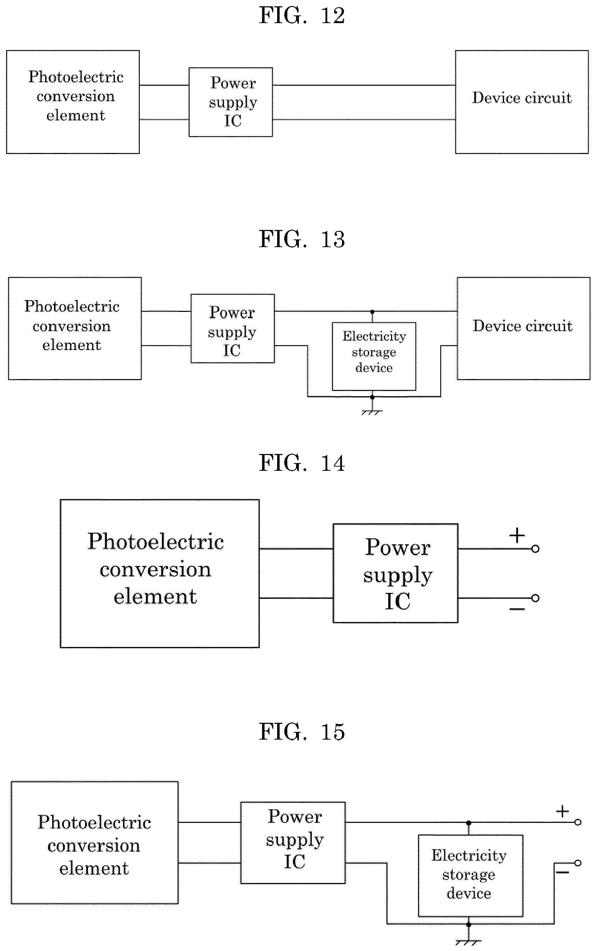

Since the output of the photoelectric conversion element varies depending on circumferential illuminance, the electronic device illustrated in FIG. 11 may not be stably driven in some cases. In this case, as illustrated in FIG. 12, a power supply IC for a photoelectric conversion element can be incorporated between the photoelectric conversion element and the circuit of the device in order to supply stable voltage to a side of the circuit, and such arrangement is effective.

The photoelectric conversion element can generate electricity as long as light of a sufficient illuminance is applied. However, when an illuminance is not enough to generate electricity, desired electric power cannot be obtained, which is a disadvantage of the photoelectric conversion element. In this case, as illustrated in FIG. 13, an electricity storage device, such as a capacitor, is mounted between a power supply integrated circuit and a device circuit. As a result, excess electricity from the photoelectric conversion element is stored in the electricity storage device, and the electric power stored in the electricity storage device can be supplied to the device circuit when the illuminance is too low or light is not applied to the photoelectric conversion element, and therefore the device can be stably driven.

As described above, by using the power supply integrated circuit or the electricity storage device in combination with the electric device including a combination of the photoelectric conversion element of the present disclosure and the device circuit, the electronic device can be driven even in an environment without a power supply, does not require replacement of a cell, and can be stably driven. Therefore, it is possible to make the most of advantages of the photoelectric conversion element.

The photoelectric conversion element of the present disclosure can be also used as a power supply module, and such application is effective. As illustrated in FIG. 14, for example, the photoelectric conversion element of the present disclosure is coupled with a power supply integrated circuit for a photoelectric conversion element to constitute a DC power supply module in which the photoelectric conversion element can supply electric power generated through photoelectric conversion to the power supply integrated circuit at the predetermined voltage level.

As illustrated in FIG. 15, moreover, an electricity storage device is added to the power supply integrated circuit to constitute a power supply module, in which the electric power generated by the photoelectric conversion element can be stored in the electricity storage device, and the electricity can be supplied even when illuminance is too low or light is not applied to the photoelectric conversion element.

The power supply module of the present disclosure as illustrated in FIGs. 14 and 15 can be used as a power supply module without replacement of a cell as in case of conventional primary cells.

### Examples

The present disclosure will be described below by way of Examples, but should not be construed as being limited to these Examples in any way.

### (Example 1)

### <Production of photoelectric conversion element>

On a glass substrate serving as a first substrate, a film of indium-doped tin oxide (ITO) and a film of niobium-doped tin oxide (NTO) were sequentially formed as a first electrode by sputtering.

Next, a dense layer (average thickness: 20 nm) of titanium oxide was formed as a first hole-blocking layer on the first electrode by reactive sputtering with oxygen gas.

A titanium oxide paste (18NR-T, available from Greatcell Solar Materials) was applied onto the hole-blocking layer to have an average thickness of about 1.2 µm. The applied paste was dried at 120°C, followed by firing in air at 500°C for 30 minutes, to thereby form a porous first electron-transporting layer.

The glass substrate on which the first electron-transporting layer had been formed was immersed in a solution obtained by adding a mixed liquid of acetonitrile and t-butanol (volume ratio 1:1) to First Photosensitization Compound B1-10 (0.2 mM) and stirring, followed by leaving to stand in the dark for 1 hour, to allow the first photosensitization compound to be adsorbed on the surface of the first electron-transporting layer.

To 1 mL of a chlorobenzene solution, 150 mL of Organic Hole-Transporting Material D-7 (HT-263, available from Merck KGaA), 70 mM of lithium bis(trifluoromethanesulfonyl)imide) serving as lithium salt and available from KISHIDA CHEMICAL Co., Ltd., 135 mM of a basic compound of 4-tert-butylpyridine (TBP, available from Sigma-Aldrich Japan), and 15 mM of Cobalt Complex F-11 (FK209, available from Greatcell Solar Materials Pty Ltd.) were added and dissolved, to thereby prepare a first hole-transporting layer coating liquid.

Onto the first electron-transporting layer on which the first photosensitization compound was adsorbed, the first hole-transporting layer coating liquid was applied by die coating, to thereby form a first hole-transporting layer having a thickness of about 500 nm.

On the first hole-transporting layer, a silver nanowire dispersion liquid (available from Sigma-Aldrich Japan) including silver nanowire fragments each having a diameter of 60 nm and a length of 10 µm was applied by die coating to form a film having a thickness of 70 nm, followed by heating and drying at 120°C for 5 minutes. Moreover, polyaniline emeraldine base (available from Sigma-Aldrich Japan) was applied by die coating to form a film, followed by heating and drying at 100°C for 30 minutes, to thereby form a second electrode.

Thereafter, the edges of the glass substrate to which a sealing member was to be disposed was etched by laser processing, and a through hole for connecting with the ITO layer, which was to be a terminal extraction part, was formed by laser processing to produce Photoelectric Conversion Element 1. As a result, a first photoelectric conversion section formed of Photoelectric Conversion Element 1 was produced.

### -Production of second photoelectric conversion section-

Next, a second photoelectric conversion section formed of Second Photoelectric Conversion Element 2 including a third electrode, a second electron-transporting layer formed on the third electrode, a second photosensitization compound that was different from the first photosensitization compound and was adsorbed on the second electron-transporting layer, a second hole-transporting layer, and a fourth electrode was produced in the same manner as the production of the first photoelectric conversion section, except that First Photosensitization Compound B1-10 of the first photoelectric conversion section was replaced with Second Photosensitization Compound B1-17.

Next, a UV curable resin (TB3118, available from ThreeBond Holdings Co., Ltd.) was applied to the edge of the first substrate of the first photoelectric conversion section by a dispenser (2300N, available from SAN-EI TECH Ltd.) to coat the power generation region. Thereafter, the resultant was moved into a glove box which was controlled to have a dew point of -40°C and the oxygen concentration of 10%, and the second photoelectric conversion section was placed on the UV curable resin and UV irradiation was performed to cure the UV curable resin, followed by heating at 80°C for 60 minutes to seal the power generation region, to thereby produce a photoelectric conversion element of Example 1, as illustrated in FIG. 1.

The obtained photoelectric conversion element was subjected to the performance evaluation in the following manner. The results are presented in Table 1.

### <Performance evaluation of photoelectric conversion element>

IV characteristics of each of the photoelectric conversion elements were evaluated by irradiating with 5,000 K white LED adjusted to 1,000 lux from the side of the first photoelectric conversion section, and parallel connecting the first photoelectric conversion section and the second photoelectric conversion section using a solar cell test system (As-510-PV03, available from NF CORPORATION). The obtained open circuit voltage Voc1 (V) and maximum output power Pmax1 (µW/cm²) are presented in Table 1. Moreover, the open circuit voltage Voc2 (V) and maximum output power Pmax2 (µW/cm²) measured in the same manner as above but using 2,700 K warm color LED adjusted to 1,000 lux instead are presented in Table 1.

### (Example 2)

A photoelectric conversion element of Example 2, as illustrated in FIG. 1, was produced in the same manner as in Example 1, except that 4-tert-butylpyridine serving as the basic compound was replaced with Basic Compound H-1. The performance of the photoelectric conversion element of Example 2 was evaluated in the same manner as in Example 1. The results are presented in Table 1.

### (Example 3)

A photoelectric conversion element of Example 3, as illustrated in FIG. 1, was produced in the same manner as in Example 2, except that the lithium salt was replaced with lithium (fluorosulfonyl)(trifluoromethanesulfonyl)imide (available from Tokyo Chemical Industry Co., Ltd.). The performance of the photoelectric conversion element of Example 3 was evaluated in the same manner as in Example 1. The results are presented in Table 1.

### (Examples 4 to 10)

Photoelectric conversion elements of Examples 4 to 10, as illustrated in FIG. 1, were each produced in the same manner as in Example 3, except that First Photosensitization Compound B1-10 of the first photoelectric conversion section and Second Photosensitization Compound B1-17 of the second photoelectric conversion section were changed to the first and second photosensitization compounds presented in Table 1. The photoelectric conversion elements of Examples 4 to 10 were each subjected to the performance evaluation in the same manner as in Example 1. The results are presented in Table 1.

### (Example 11)

A photoelectric conversion element of Example 11, as illustrated in FIG. 2, was produced in the same manner as in Example 10, except that a film of aluminum oxide (available from Sigma-Aldrich Japan) having a thickness of 3 µm was disposed on the second electrode of the first photoelectric conversion section and on the second electrode of the second photoelectric conversion section to form a buffer layer on the second electrode of the both sections, and a UV-curable resin was applied on the entire surface including a power generation region and cured. The performance of the photoelectric conversion element of Example 11 was evaluated in the same manner as in Example 1. The results are presented in Table 1.

### (Example 12)

A photoelectric conversion element of Example 12 was produced in the same manner as in Example 3, except that the second electrode of the first photoelectric conversion section was replaced with Ag (10 nm) formed by vacuum vapor deposition. The performance of the photoelectric conversion element of Example 12 was evaluated in the same manner as in Example 1. The results are presented in Table 1.

### (Comparative Example 1)

A photoelectric conversion element of Comparative Example 1 was produced in the same manner as in Example 3, except that the second photoelectric conversion section was replaced with alkali-free glass (EAGLE XG, available from Corning Incorporated). The performance of the photoelectric conversion element of Comparative Example 1 was evaluated in the same manner as in Example 1. The results are presented in Table 1.

### (Comparative Example 2)

A photoelectric conversion element of Comparative Example 2 was produced in the same manner as in Example 3, except that the first photoelectric conversion section was replaced with alkali-free glass (EAGLE XG, available from Corning Incorporated). The performance of the photoelectric conversion element of Comparative Example 2 was evaluated in the same manner as in Example 1. The results are presented in Table 1.

### (Comparative Example 3)

A photoelectric conversion element of Comparative Example 3 was produced in the same manner as in Example 3, except that the sensitization dye of the first photoelectric conversion section and the sensitization dye of the second photoelectric conversion section were changed to be identical to each other. The performance of the photoelectric conversion element of Comparative Example 3 was evaluated in the same manner as in Example 1. The results are presented in Table 1.

**Table 1**

| | First photoelectric conversion section | Second photoelectric conversion section | 5000K | | 2700K | |
|---|---|---|---|---|---|---|
| | First photosensitization compound | Second photosensitization compound | Voc1 (V) | Pmax1 (µW/cm²) | Voc2 (V) | Pmax2 (µW/cm²) |
| Ex. 1 | B1-10 | B1-17 | 0.58 | 5.3 | 0.59 | 5.4 |
| Ex. 2 | B1-10 | B1-17 | 0.73 | 9.7 | 0.75 | 9.9 |
| Ex. 3 | B1-10 | B1-17 | 0.74 | 10.3 | 0.76 | 10.6 |
| Ex. 4 | B1-10 | B2-2 | 0.71 | 10.6 | 0.73 | 11.5 |
| Ex. 5 | B1-10 | D131 | 0.73 | 11.1 | 0.74 | 10.2 |
| Ex. 6 | B1-17 | B2-2 | 0.69 | 10.5 | 0.71 | 11.8 |
| Ex. 7 | B1-17 | D102 | 0.73 | 11.5 | 0.75 | 10.8 |
| Ex. 8 | B1-17 | D131 | 0.73 | 11.3 | 0.74 | 10.7 |
| Ex. 9 | B2-1 | B2-2 | 0.75 | 10.2 | 0.76 | 11.2 |
| Ex. 10 | B2-2 | D131 | 0.74 | 9.9 | 0.75 | 9.8 |
| Ex. 11 | B2-2 | D131 | 0.74 | 10.1 | 0.75 | 10.2 |
| Ex. 12 | B1-10 | B1-17 | 0.74 | 10.5 | 0.72 | 10.4 |
| Comp. Ex. 1 | B1-10 | - | 0.75 | 8.9 | 0.74 | 8.2 |
| Comp. Ex. 2 | - | B1-10 | 0.71 | 7.2 | 0.69 | 6.3 |
| Comp. Ex. 3 | B1-10 | B1-10 | 0.74 | 9.1 | 0.73 | 8.3 |

It was found from the results of Table 1 that Examples 1 to 12 had absorption of light over a wide wavelength range and the high maximum output power compared to Comparative Examples 1 to 3.

Moreover, it was found from the results of Example 10 and Example 11 that the air interface did not preferably exist between the first photoelectric conversion section and the second photoelectric conversion section.

For example, embodiments of the present disclosure are as follows.
<1> A photoelectric conversion element including:
   a first substrate;
   a second substrate; and
   a first photoelectric conversion section and a second photoelectric conversion section, where the first photoelectric conversion section and the second photoelectric conversion section are disposed between the first substrate and the second substrate via a sealing member,
   wherein the first photoelectric conversion section includes a first electrode, a first electron-transporting layer formed on the first electrode, a first photosensitization compound adsorbed on a surface of the first electron-transporting layer, a first hole-transporting layer, and a second electrode, and
   wherein the second photoelectric conversion section includes a third electrode, a second electron-transporting layer formed on the third electrode, a second photosensitization compound adsorbed on a surface of the second electron-transporting layer, a second hole-transporting layer, and a fourth electrode, where the second photosensitization compound is different from the first photosensitization compound.
<2> The photoelectric conversion element according to <1>,
   wherein at least one of the second electrode and the fourth electrode includes a charge-collecting layer, and
   wherein the charge-collecting layer includes conductive nanowires, and a conductive polymer or carbon nanotubes covering at least part of the conductive nanowires, where the charge-collecting layer is disposed on the hole-transporting layer.
<3> The photoelectric conversion element according to <2>,
   wherein the conductive polymer includes polythiophene, polyaniline, polypyrrole, or a derivative of the polythiophene, the polyaniline, or the polypyrrole.
<4> The photoelectric conversion element according to <2> or <3>,
   wherein at least one of the second electrode and the fourth electrode is transparent to light.
<5> The photoelectric conversion element according to any one of <1> to <4>,
   wherein at least one of the first electron-transporting layer and the second electron-transporting layer includes porous titanium oxide particles.
<6> The photoelectric conversion element according to any one of <1> to <5>,
   wherein at least one of the first hole-transporting layer and the second hole-transporting layer includes a p-type semiconductor material, a basic compound, and a lithium salt, and the basic compound includes a pyridine compound represented by General Formula (4), 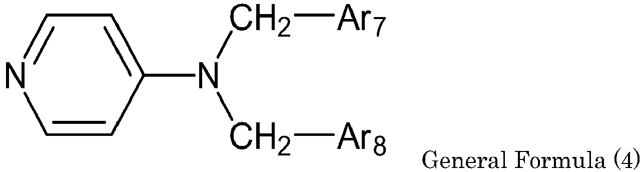
   where Ar₇ and Ars are each an aryl group that may have a substituent.
<7> The photoelectric conversion element according to <6>,
   wherein the lithium salt is lithium (fluorosulfonyl)(trifluoromethanesulfonyl)imide.
<8> The photoelectric conversion element according to any one of <1> to <7>,
   wherein the sealing member includes at least one selected from the group consisting of an acryl resin, an epoxy resin, and an olefin resin.
<9> An electronic device including:
   the photoelectric conversion element according to any one of <1> to <8>; and
   a device driven by electricity generated through photoelectric conversion of the photoelectric conversion element.
<10> A power supply module including:
   the photoelectric conversion element according to any one of <1> to <8>; and
   a power supply integrated circuit.

The photoelectric conversion element according to any one of <1> to <8>, the electronic device according to <9>, and the power supply module according to <10> can solve the above-described various problems existing in the art, and can achieve the object of the present disclosure.

## Claims

1. A photoelectric conversion element comprising:
a first substrate;
a second substrate; and
a first photoelectric conversion section and a second photoelectric conversion section, where the first photoelectric conversion section and the second photoelectric conversion section are disposed between the first substrate and the second substrate via a sealing member,
wherein the first photoelectric conversion section includes a first electrode, a first electron-transporting layer formed on the first electrode, a first photosensitization compound adsorbed on a surface of the first electron-transporting layer, a first hole-transporting layer, and a second electrode, and
wherein the second photoelectric conversion section includes a third electrode, a second electron-transporting layer formed on the third electrode, a second photosensitization compound adsorbed on a surface of the second electron-transporting layer, a second hole-transporting layer, and a fourth electrode, where the second photosensitization compound is different from the first photosensitization compound.

2. The photoelectric conversion element according to claim 1,
wherein at least one of the second electrode and the fourth electrode includes a charge-collecting layer, and
wherein the charge-collecting layer includes conductive nanowires, and a conductive polymer or carbon nanotubes covering at least part of the conductive nanowires, where the charge-collecting layer is disposed on the hole-transporting layer.

3. The photoelectric conversion element according to claim 2,
wherein the conductive polymer includes polythiophene, polyaniline, polypyrrole, or a derivative of the polythiophene, the polyaniline, or the polypyrrole.

4. The photoelectric conversion element according to claim 2 or 3,
wherein at least one of the second electrode and the fourth electrode is transparent to light.

5. The photoelectric conversion element according to any one of claims 1 to 4, wherein at least one of the first electron-transporting layer and the second electron-transporting layer includes porous titanium oxide particles.

6. The photoelectric conversion element according to any one of claims 1 to 5, wherein at least one of the first hole-transporting layer and the second hole-transporting layer includes a p-type semiconductor material, a basic compound, and a lithium salt, and the basic compound includes a pyridine compound represented by General Formula (4), 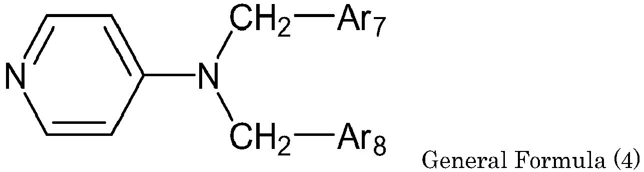 where Ar₇ and Ars are each an aryl group that may have a substituent.

7. The photoelectric conversion element according to claim 6,
wherein the lithium salt is lithium (fluorosulfonyl)(trifluoromethanesulfonyl)imide.

8. The photoelectric conversion element according to any one of claims 1 to 7, wherein the sealing member includes at least one selected from the group consisting of an acryl resin, an epoxy resin, and an olefin resin.

9. An electronic device comprising:
the photoelectric conversion element according to any one of claims 1 to 8; and
a device driven by electricity generated through photoelectric conversion of the photoelectric conversion element.

10. A power supply module comprising:
the photoelectric conversion element according to any one of claims 1 to 8; and
a power supply integrated circuit.
